# EUROPEAN PATENT APPLICATION

(11) **EP 2 091 254 A1**
(43) Date of publication of application: **19.08.2009**
(21) Application number: 08151484.6
(22) Date of filing: 15.02.2008
(51) Int. Cl.: H04N 7/173

(54) **Apparatus and methods for content protection and distribution using alternate contents to provide access to protected primary content**

(71) Applicant: Mangiavacchi, Jacopo, 00189 Roma (IT)
(72) Inventor: Mangiavacchi, Jacopo, 00189 Roma (IT)
(74) Representative: Deambrogi, Edgardo

(57) **Abstract**

A method for conditional access to a primary protected digital content is disclosed, based on preliminary access to an alternate content. The method includes the steps of:
- providing a primary digital content to a client in an encoded form; and
- providing to the client a predetermined alternate content associated with the primary content,
whereby access to the primary content is dependent on the consumption of the alternate content.

The method is based upon embedding a decoding key for unlocking protection of the primary content throughout a digital alternate content, in such a way that the key is spread inside the alternate content,
the digital alternate content being adapted to release the decoding key at a client by integrally playing said alternate content according to predetermined playing rules.

## Description

### Background of the Invention

The present invention concerns the distribution of goods or services to an end user, particularly digital goods, such as multimedia digital goods like, for example, video contents.

Digital goods in general could be distributed using different business model and different distribution channels.

In a typical scenario, digital contents are encoded by a content provider using standard hardware and software technologies and consumed by the end user using some special software and or hardware devices as a set-top-box or personal media player in the case of a video content. Access to the contents is normally limited to known, trusted and authorized users by means of an encryption technique encapsulated during an encoding phase of the content.

Typical business models are based on a sort of subscription model, pay per use model or a mix thereof, and the end user pays a distributor on behalf of the content owner for the content consumption. Usually, each kind of digital good is associated with a specific business model, e.g. for digital music is usually adopted a pay to own model, while for digital video is adopted a pay per view and/or a monthly subscribe model.

Digital goods distribution generally adopt techniques of Conditional Access (CA) and/or Digital Right Management (DRM) in order to authorize and bill the user as well as to protect the illegal distribution of the contents.

Conditional access techniques are typically used to authenticate an end user and provide an authorization and billing infrastructure to allow the user to consume a digital content and pay for it. These techniques concentrate on how the end user accesses to the digital good distribution. DRM techniques goes over the end user authentication and authorization service and also implement a way to protect any illegal reproduction of contents. They are mainly focused on the protection of the content itself, independently of how this is distributed and obtained by the end user. DRM techniques can also guarantee the integrity of digital goods and prevent the manipulation of the entire digital content.

DRM is a very good strategy for content owner and different solutions available on the market allow the adoption of different business model, e.g. from the pay per view one to the monthly subscription one. Moreover, in the digital music business is currently very typical what is called an "end-to-end" model, where a unique business actor buys right to sell content from various major content producers, implements the technology, owns the distribution process and sells the content consumption software and devices. In this scenario, custom DRM solutions are eventually used to protect contents when asked from a major holding rights to digital goods. However, DRM is not well accepted by the end user. This mainly occurs in the digital music industry where the end user typically pays to own a digital content, but actually he is not able to really own it and use it as it had bought digital music on a physical distribution carrier like a compact disc. In this specific scenario at present it is seriously emerging a new, DRM free, model.

Conversely, the digital video business model is not fully defined yet, but a more complex scenario is emerging where different business actors (technology providers, majors, broadcasters and telecom operators) are trying to define their own different distribution model. In the digital video business content protection is considered a strong request from the content owner and in many case DRM technologies are adopted to protect illegal distribution.

Currently, digital content distribution occurs through different networks as the Internet, telecommunications wire-line private networks like for example cable, copper line (ADSL) and fibre (FTTH), satellite or radio terrestrial networks (DVB), next generation wireless networks and mobile networks. Several modem content distribution models are currently emerging as IPTV, Web TV and Peer to Peer (P2P) television but even a traditional distribution on physical carriers such as CD and DVD could be considered for digital video distribution. There are known solutions which integrate the physical distribution with an Internet-based service for content selection and end user authentication, authorization and billing. Many other solution are emerging in the market in these years, like Podcasting techniques and Personal Video Recording or Digital Video Recording solutions (PVR or DVR), as for example the products from TiVo Inc. as disclosed in their internet site (http://www.tivo.com/) at the date of filing of the present application.

Digital music and video distribution models are used here in order to simplify the understanding of the background and summary of the invention but any other digital content could be considered like, by way of non limitative example, electronic paper, any kind of multimedia content in a more generic way, software licenses and any kind of digital goods or services. In a more general way, as described in the above example of a combination of physical distribution of a content on a DVD and an Internet request, authorization and billing system, it could be even possible to think about the distribution of digital rights for any kind of digital or material good or service.

Now, generally referring to the business models implemented to provide contents to end users, alternate contents as for example advertising are often used in the business, independently on whether and how the end user pays to consume a digital good, or to obtain a right to consume a material good or service.

In some cases these alternate contents are so relevant and important that the consumption of an advertising message allows the user to consume the associated digital good or material good or service for free. The standard television broadcasting business is a perfect example of the importance of alternate contents where advertising (the alternate content) enables an end user to consume a digital good (the primary content) as a television program or a movie for free. In general, TV broadcasted advertising suffer from the basic limitation of the distribution model (network) and software infrastructure available in this context. Commercial advertising on video is usually intended for a general audience and advertising messages are not delivered based on single user profiles and experiences. Moreover, they are broadcast without really considering the end user primary content consumption experience, e.g. they interrupt the pathos or, in general way, the immediate consumption of the primary content without any warning or pre-alert. In this way it is quite impossible for an advertiser to make the advertising message to be perceived by the end user as a "suggestion" to buy a product he is really interested in.

In this context, video recording apparatus and in particular DVR, PVR digital recording solutions allow the end user not only to re-play in a different time contents already broadcasted by traditional television, but also allow him to skip or fast-forward the video during the advertising playing. This is seen as a plus for the end user, mainly because traditional advertising is perceived as an annoying invasion experience during the consumption of video contents.

For the above reasons it is quite impossible for advertisers to develop a trusted relation between the consumer and the advertised industry. In fact, the general perception of advertising as an annoying interruption, as well as the use of apparatus as DVR, PVR to avoid the consumption of commercials, are seriously mining the advertisement business industry.

In order to solve the above problems several solutions have been developed. Majors, advertisers and broadcasters are adopting techniques based on watermarking and/or transmission signal event, which are adapted to signal to the client software or the custom playing device (e.g. the set-top-box or DVR/PVR) that a commercial is actually presented to the end user, so that in some way the client software and/or playing device may disable any user interface adapted to skip or fast-forward the commercials, without really implementing an intrinsic security model of advertise enforcement.

Anyway, the availability of local digital registration of primary contents with advertisement inside could allow an expert user to easily develop illegal software intended to eliminate commercials and even illegally redistribute the primary contents without the commercials through an illegal network.

As to the distribution of video contents over the Internet, solutions are actually being developed which allow the free distribution of traditional television contents over the Internet together with advertisement commercials. These solution are generally developed on top of current available Digital Right Management (DRM) technologies and products in the market. The adoption of DRM technologies guarantee the overall integrity of the entire primary content and makes it more difficult to illegally cut the commercials and redistribute the contents. In this context, DRM technologies are handled like in traditional Pay-per-View or Monthly subscribe model, where contents are protected (encrypted) at the encoding acquisition time on the backend. For this reason, commercials are inserted in a generic way inside the entire primary content during the encoding phase on the backend so as to target a generic audience as it occurs in the traditional broadcasting television.

The problem of enforcing the end user to watch an advertisement is addressed, for example, by the patent application US 2006/0070095 Al to Koninklijke Philips Electronics N.V., which discloses solutions on top of specific hardware and software infrastructure like the DVB/MHP platform. US patent application no. 2007/0201829 Al to IBM Corporation addresses a method for providing advertising during DVD playback. These patents disclose specific platforms and in general they do not implement a robust enforcement mechanism based on data protection, cryptography and embedding.

In the field of video content distribution over the Internet some traditional Web Television solutions are using a so-called "in stream" model to introduce a small commercial ad before the consumption of a small and not premium quality primary content. In general, most of these solutions are not based on DRM technologies and basically they can allow quite easily an illegal sniffing of the primary content and therefore the removal of the advertising.

The aspect of distributing advertisement commercials in a more attractive way to the end user, like for example using demographic information or customer profile, is addressed for example in the patent application US 2004/0045028 A1 to Open TV inc. As above, this invention is limited to a specific technology platform and content delivery network. Also, it does not provide an unique model for distributing advertising in a per user model as well as solving the problem of enforcement of the advertisement.

Patent application US 2007/0294772 to Microsoft Corp. discloses a method of enforcing rendering advertisements and other predetermined media content in connection with playback of downloaded selected media content. The playback of the selected media content is made conditional on acquisition of a playback token that is generated in response to playback of the predetermined content. The playback token may be implemented as a digital rights management (DRM) license acquired in response to playback of the predetermined content. A content insertion engine for inserting ads or other predetermined content into the playback of downloaded content is also disclosed. Disadvantageously, the playback token is generated by the content insertion engine at the client side and after the consumption of the predetermined content, which does not prevent the system from cracking of the token or of the token generating rules. Moreover, in the case of a playback token implemented by a DRM licence, the system requires on-line communication of the local content insertion engine with a DRM licence server, thus limiting the application of the invention technique to those content delivery systems which are connected with a remote content provider, and excluding any local delivery of a content previously stored on a material carrier where remote connectivity is not available.

In conclusion, at present solutions are not known in the market which solve the overall problem of digital advertising simultaneously allowing strong security protection technique, whereby a decoding key or a DRM license are not generated on the client device, and simultaneously allowing off line consumptions of contents and a totally transparent content distribution choice, as well as selective advertising to the end user, thus enabling the development of a strong business model in this context.

Moreover, it would be desirable to extend a secure and selective advertising model for audio/video content on a more generic model of consumption of digital "primary" contents to an end user only after the prior consumption of "alternate" contents, where primary contents should be understood as any kind of digital goods or digital rights for material goods or services.

### Summary of the Invention

The object of the present invention is to provide an improved system and method for digital content protection and distribution, which enables access by an end user to a protected primary content, in the form of any kind of digital goods or digital rights for material goods or services, only after the prior consumption of "alternate" contents, overcoming the disadvantages and limitations of the prior art.

Another object of the invention is to offer a secure and selective advertising model for audio/video content consumption by an end user, which provides an intrinsic enforcement method for alternate contents consumption.

According to the present invention, these objects are achieved by means of a method and a system for accessing to a digital content having the characteristic features described in the independent claims.

Particular embodiments form the subject of the dependent claims, which are to be understood as integral part of the present description.

Specifically, the invention defines a new model of conditional release of digital "primary" contents to an end user, i.e. release of primary contents based on the previous consumption of "alternate" contents, based on protected primary contents distributed associated with alternate contents arranged to provide the end user with means to unlock the protected primary contents, wherein the keys to unlock the primary contents are embedded into the alternate contents.

Primary contents may, for example, be implemented as digital video contents but are not limited to that, and they could be expressed in any form of digital goods or even in the form of digital rights to access to digital or material goods or services. Examples of primary contents expressed as digital goods could be, for example, audio contents, video contents, e-books, video-games and any other multimedia content, such as ringtones for cellular phones etc. Examples of primary contents expressed as digital rights for temporary or unlimited use of digital goods or services could be, for example, digital rights for the execution of local computer programs, digital rights to access any kind of web services, digital rights for the execution of video-games on computers and/or game consoles, etc. Primary contents could also be expressed in the form of digital rights to gain access to material goods or services, for example representing the rights for a particular POS (Point of Sale) device to apply a discount for the consumption of a material good or service, such as in a filling station or shopping centres. In the latter situations, where the consumption of a material good or service could be experienced by the end user as a wait time experience, like for example waiting in a queue or for the execution of the desired service, the end user can consume alternate contents in order to gain rights to apply a special discount for purchasing goods and/or services, the discount being applied in any possible form, e.g. in the form of products and/or service given for free. Examples of scenarios concerning primary contents expressed as digital rights for temporary or unlimited use of material goods or services could be, for example, watching commercials at a service station during the filling up of a car in order to gain a discount for the service, watching commercials on a portable device in a queue while checking in or out in any social context (cinema, wall mart, hotel, airport, etc.).

Another example scenario is represented by computer based or multimedia training: alternate contents being some kind of mandatory or required training contents to be consumed by certain class of users. In this case the primary content could be an encrypted and protected digital document to be printed in order to certify that the said training has been completed or, more generally, a digital right to certify that said training has been completed.

Only by way of example, a man skilled in the art could see alternate contents implemented as advertisement commercials, but they are not limited to that. In a more general way alternate content could be any digital sequence of information intended to be illustrated to an end user via a multimedia interface.
According to the invention primary contents are protected with special keys embedded inside alternate contents, providing an intrinsic enforcement method for alternate contents consumption in order to obtain the keys to unlock the primary contents. The general rule underlying the invention is that the alternate contents must be wholly and integrally (i.e. without any skipping or fast-forwarding thereof) consumed before allowing the consumption of primary contents, i.e. the process of obtaining the key to unlock the primary contents is intrinsically linked with the process of consumption of the alternate content itself, e.g. by means of embedding the unlocking key throughout the whole length of the alternate content. For the sake of clarity, one possible example of a way to achieve this goal is the use of well known technique of steganography, but it is not limited only to that technique. Any equivalent or stronger technique of embedding the unlocking key into the whole alternate content could be used.

In the same way primary content producers and alternate content producers can specify for each content some metadata so as to describe the kind of content and the supposed target user profile for that content.

Moreover, an implicit end user profile is constantly updated for each end user during the consumption of primary contents. In this way primary content metadata contribute to the definition of the user profile in order to let the system always choose the better suitable alternate content for each end user and the particular primary content to be consumed at the moment.

Thus, conveniently, the invention is adapted to give more value and possibilities to the advertising industry, ensuring that better campaigns could be developed to address potential customers. Advertisement companies that upload alternative content to a system based on the invention could better specify how to interact with the profiles directory specifying business rules expressed in a syntax similar, but not limited to, the Structured Query Language (SQL) typically used in information technology solutions.

As to the delivering of primary and alternate contents to the end user, the invention is adapted to comply with any content distribution technology, thus defining a transparent distribution model. This model could, for example, be implemented using standard broadcasting techniques like DVB broadcasting or IP-based networking using multicast, broadcast or unicast techniques. On the Internet and IP-based scenario any kind of streaming, IPTV and peer-to-peer (P2P) content distribution model could be transparently considered for contents distribution. Current and future wireless and mobile networks are considered here in a more generic sense as any IP-based network, and the invention is totally transparent about any specific issues of these networks. Even material distribution technologies like DVD (Digital Versatile Disk), next generation High Def DVD (BlueRay, HD-DVD) and Memory Unit could be considered for primary and alternate content distribution.

The transparent delivery feature of this invention should be interpreted even in a hybrid combination of different transport models. For example, the invention could be implemented on a DVB or DVD device adapted to be connected to the Internet so as to access primary contents from the DVB broadcast stream or from the DVD disk and request alternate content from the Internet during playback.

The transparent delivery distribution of primary and alternate contents could occur both in an on-line and in a off-line mode. In an on-line mode contents are distributed and accessed by the end-user at runtime, while asking for their consumption. In a off-line mode contents could be pre-distributed allowing the consumption of both primary and alternate contents even if the end user is totally disconnected from Internet or from any IP-based network. An exemplary scenario for off-line transparent content distribution could be the adoption of the Podcasting Internet technique. In this scenario primary and alternate contents could be pre-distributed and cached on a local hard-disk on an end user device as soon as contents are available and could be later consumed by the end user.

In a similar scenario the end user could even record contents on a local hard-disk for a later consumption as in the DVR and PVR model.

The alternate content preparation and synchronisation with the primary content fruition according to the invention allow to always delivery up-to-date and profile-based alternate contents to the end user even in an off-line mode. Advantageously, in this scenario the invention allows advertise business even in off-line modalities enforcing the consumption from the end user of always up-to-date alternate contents before allowing him to consume primary contents.

In case of primary contents expressed as digital goods, the invention considers the adoption of a commercial DRM solution available on the market or the adoption of a custom implementation of this technique. Those skilled in the art know that according to the DRM technique primary contents are encrypted and access to these contents is expressed in terms of "Right". Rights are digital data that contains keys to unlock related contents and attributes about how the user can consume a content. Example of right attributes could be a number of times user can playback the relevant content or the ability to copy the relevant content on a personal media player.

According to the invention, client software components could be arranged to obtain a content right embedded in an alternate content while playing the alternate contents, and then to obtain a primary content key from this right by means of standard asymmetric key management solutions. Again, key and rights management as well as primary content protection could be implemented using commercial DRM technologies or any other standard algorithm.

A client module responsible for the above procedure could also be arranged to assure an advertise enforcement feature. This means that alternate contents must always be integrally consumed to obtain the Right, because the process of de-embedding of a right is encapsulated inside the rendering/playback process, i.e. the keys to unlock the encrypted rights are embedded inside the alternate contents sent on the transparent distribution service.

The adoption of standard right attributes like the number of time a single right could be used to unlock a protected content and an expiry timestamp are used to implement a mechanism called alternate content re-sync that implement a technique of preparation of contents for off-line consumptions. Alternate content re-sync basically assures the consumption of always up-to-date commercials even in the PVR/DVR and Podcasting scenario.

According to a further aspect of the invention, in case of long primary contents like, for example, digital video contents, the invention provides control and flexibility on the experience of alternate contents consumptions, since the entire primary content could be divided in several content segments and corresponding alternate content segments are inserted between each primary content segment to enable the consumption thereof. Consumption of an alternate content sequence allow the consumption of a predetermined number of next primary content segments. Immediately after the consumption of the last primary content segment, if the entire primary content is not terminated, the system is arranged to ask the end user to consume another set of alternate contents before allowing him to consume the next set of primary content segments.

In the case of digital video contents the user experience is somewhat similar to the experience of watching traditionally broadcasted television programs mixed with advertising inserts.

According to the invention, advantageously the end user is able to decide what kind of commercial to watch and when exactly watch the commercials. The invention defines a way for the end user to be notified in a less intrusive way about when to watch alternate contents that could be even possibly postponed. To this aim the system according to the invention is based also on the adoption of a complex directory of profiles, made with metadata information about end users, primary contents and alternate contents. The directory of profiles let the system choose the alternate contents in what could be perceived by the end user as a less intrusive and maybe more acceptable way. End users can specify in an explicit way a user profile which better describes his/her as a consumer, e.g. they can specify the kind of undesirable alternate contents. Potentially this system could even give to the end user the ability to skip the consumption of a particular alternate content perceived as a very annoying experience and request the transmission of a new alternate content instead. This technique could even be used to provide feedback to the advertising company about effectiveness of their campaigns.

Segmentation is a special innovative aspect of the invention that allows the distribution of user-profiled advertise commercials during the consumption of primary contents like in traditional television, while enforcing the consumption of fresh commercials in all on-line and off-line scenarios and independently of the particular distribution technique adopted.

According to a further aspect of the invention, two different models of enforcing the consumption of alternate contents are provided, in order to bind the consumption of primary contents to that of alternate contents.

In a "simple enforcement" model, the process itself of embedding keys to unlock primary contents inside alternate contents oblige the consumption of all the alternate contents in its wholeness, preventing the option for the end user to skip it or fast forwarding it.

A second more complex model called "strong enforcement" could be optionally adopted in order to even more closely and strictly bind the consumption of alternate contents. In this case the end-user must also provide attention to the consumption of alternate contents before proceeding with the unlocking of primary contents. A local and very simple interactivity, that can work even in off-line mode, is defined in order to let the system pay attention to alternate contents and provide feedback about that. For example, advertisement commercials could provide very simple symbolic graphic notification to the user (appearing randomly during commercials) and he must pay attention to these, remember them and their sequence and return to the system a predetermined feedback about it (at the end of the advertisement commercial consumption the system pauses and ask for a predetermined corresponding feedback from the user). Then, de-embedding procedure occurs only if the user feedback correctly matches with symbols effectively showed during commercials. In a simpler and less intrusive way sophisticated human interface devices like for example touch screen, infrared camera etc. could be used by the client module in order to verify the presence of the end user and implement the "strong enforcement" scenario. Again, here the de-embedding procedure occurs only if the system reveals the presence of the user, otherwise alternate content consumption is paused.

Symbol can be expressed even using numbers and/or letters or feedback could be returned by the user using keyboards, remote controls or in the touch screen mode, depending upon the device or form factor where system is implemented.

Potentially audio message could be used instead of symbols and in this case user could be able to provide feedback using voice recognition technologies.

In an online scenario and with client devices capable of Internet browsing the advertise commercials can also implement full interactivity, so as to enable a user to browse to the advertised product/service web site and allowing the system to proceed with the de-embedding of the key to unlock the primary content after navigation has occurred.

The invention is totally independent from any particular implementation on specific electronic devices. The invention considers, but is not limited to, devices such as personal computers, television sets, television extenders, mobile phones and smart-phones, touch-screen devices, set-top-boxes, DVRs/PVRs, home network access gateways, personal media players, POS, etc. By supporting any kind of digital content the invention is also totally independent from the digital format and/or codec of the primary and alternate contents.

### Brief description of the drawings

Further advantages and characteristic features of the present invention will become clear from the detailed description which follows, with reference to the accompanying drawings, provided purely by way of non-limitative example, in which:
figure **1A** shows the main inventive concept for consumption of protected digital primary contents, based on embedding the unlocking keys for the primary content into associated alternate contents;
figure **1B** shows an exemplary environment for the consumption of digital contents according to the inventive concept depicted in figure 1A;
figure **2** shows a variant embodiment for the consumption of digital contents according to the invention;
figure **3** is a flow chart exemplarily showing the whole process of consumption of digital contents;
figures **4** and **5** are a flow chart and a diagrammatic representation, respectively, of the processing of a primary content according to the invention;
figures **6** and **7** are a flow chart and a diagrammatic representation, respectively, of the processing of an alternate content according to the invention;
figures **8** and **9** are a flow chart and a diagrammatic representation, respectively, of the process of building and accessing a Generalized User Profile Database;
figure **10** shows the architecture of a directory of databases used with the system of the invention;
figures **11A** and **11B** are a flow chart and a diagrammatic representation, respectively, of the process of distribution of a composite content via a Transparent Content Distribution;
figure **12** shows the main inventive concept for the consumption of digital contents based on the acquisition of a digital right;
figures **13** and **14** are a flow chart and a diagrammatic representation, respectively, of the process of distribution of a right of consuming Primary Content Segments;
figures **15** and **16** are a flow chart and a diagrammatic representation, respectively, of the process of consumption of an Alternate Content in order to retrieve the right to consume Primary Content Segments;
figure **17** is a diagrammatic representation of aspects in a client module;
figures **18** and **19** are a flow chart and a diagrammatic representation, respectively, of the process of smooth migration between two subsequent primary content segments in a scenario where no alternate contents are consumed;
figures **20A** and **20B** are a flow chart and a diagrammatic representation, respectively, showing the ability for an end user to determinate when to consume alternate contents, during the consumption of a primary content segment;
figures **21** and **22** are a flow chart and a diagrammatic representation, respectively, of a Simple Enforcement Mechanism for the consumption of alternate contents by an end user;
figures **23** and **24** are a flow chart and a diagrammatic representation, respectively, of a Strong Enforcement Mechanism for the consumption of alternate contents by an end user;
figures **25** to **28** show different scenarios for the application of the invention;
figure **29** is a diagrammatic representation of an exemplary key embedding technique; and
figures **30A****,** **30B****,** **30C** and **31** are flow charts and a diagrammatic representation, respectively, of a method to allow the end user to consume alternate contents in a preventive way in order to be able to consume primary contents without interruptions at a later time.

### Detailed description of the preferred embodiments

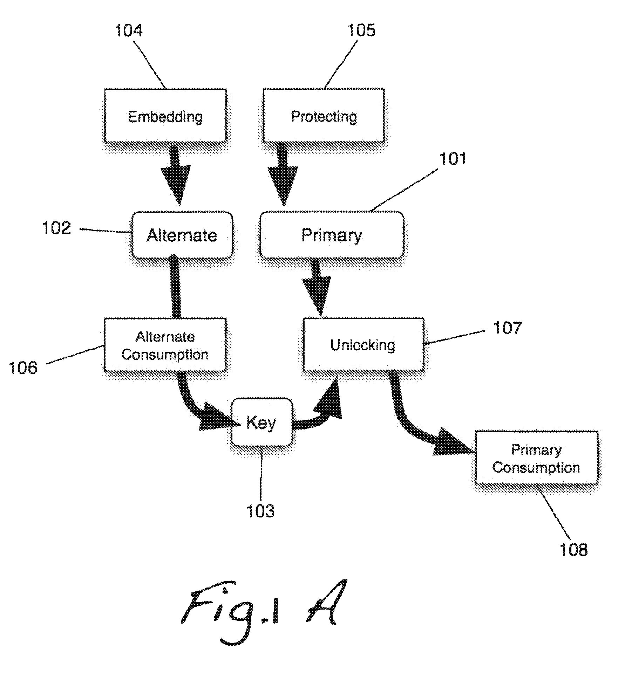

The overall idea, as depicted in **Fig.1A****,** is to allow the consumption of protected digital goods, from now on designated as "Primary Content", from an "end user" by requesting the end user to consume some other content, from now on designated as "Alternate Content". **Fig.1A** explains how the "unlocking" mechanism **107** is working: if the end user wishes to consume with process **108** a primary content **101** that is received and is protected via encryption or a more general DRM mechanism **105**, the end user is asked to consume via process **106** an Alternate Content **102** that embeds via process **104** a key **103** (or some other secret) to acquire the Right to consume the Content **101**. The embedding of the key is such that the key itself is made available only after the consumption **106** of the Alternate Content.

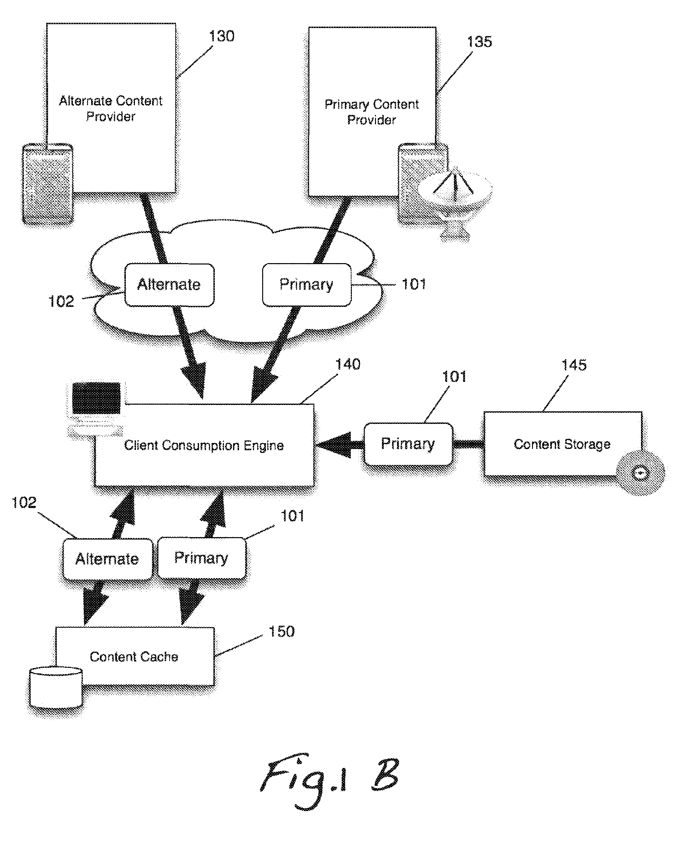

For the sake of clarity an exemplary environment for the consumption of digital contents by an end user is depicted in **Fig.1B****.** It should be stressed here that this figure does not represent the entire scope of the invention and its potential fields of application. A protected primary content **101** may be delivered to an end user device **140**, like for example a Set Top Box, a Media Player connected to a Television set, or a Personal Computer. This delivery could be made by transmission from a remote content provider via a communication line, as for example a TV Broadcasting Service **135**, or via a physical removable storage system such as an optical disc carrier **145** or an electronic memory unit. An alternate content **102** associated with the primary content and necessary for its consumption may also be delivered to the end user for example from a Internet remote content provider **130**. Both Alternate and Primary Contents could also be stored on a local Content Cache system **150** in order to allow off-line consumption of contents.

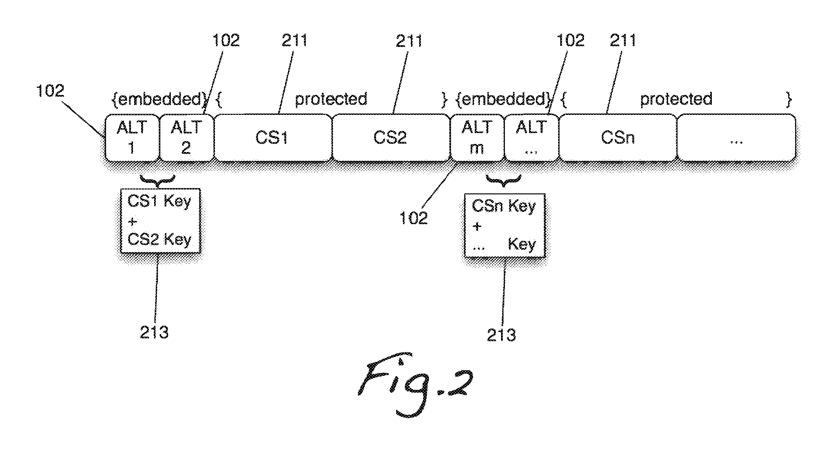

The most general case of Alternate and Primary Contents consumption flow is depicted in **Fig.2** where a Primary Content is split in several Content Segments **211**. Content Segments and corresponding Alternate Contents **102** are handled by the client on a sequential order where the sequence of Alternate Content and Primary Content Segments is constrained only by the fact that the Alternate Content consumption that will allow the consumption of the Primary Content segments should always occur before the consumption of the Primary Content. No other bounds are imposed on the sequence of Contents. **Fig.2** shows a sequence as an example, where two consecutive Content Segments **211** are unlocked by two alternate contents **102**, via a set of unlocking keys **213**. Note the fact that the embedding of the unlocking keys is an overall process that embodies the keys into the whole Alternate Content and not necessarily limited to specific and narrow locations in the Alternate Content itself.

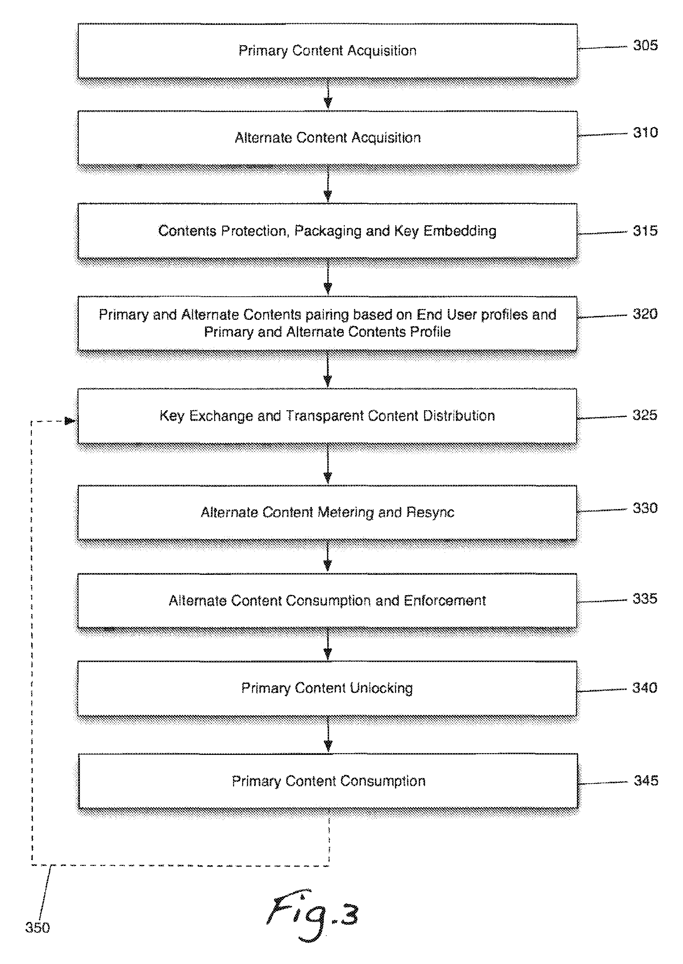

**Fig.3** shows the overall process and components overview. During the phase **305** the Primary Content is acquired as well as the Alternate Content **310**. The acquired digital contents will then follow two different pipelines of processing **315**. Primary Content is split in different segments and protected via some cryptographic method that could be part of a more general "Digital Right Management" technology, or even a custom protection mechanism. Alternate content is, on the other hand, processed in a way to "embed" in it some secret that could be used later to unlock the protected Primary Content **103** or **213**, where the preferred embedding mechanism is not narrowing or limiting the scope of the invention.

All the Contents, i.e. the Primary Content and the Alternate Content, as processed, protected and with all the embedded unlocking secrets, are stored and indexed at step **320**. At this stage of the process it is possible to build a categorization of all the Primary and Alternate Contents in order to build up profiles that will be used to choose which Content to distribute to the end user. A general User Profile could also be build via explicit information provided by the user and extended via the user consumption of the Digital Goods or Contents.

Step **325** indicates a process of distribution of the Content in a way that better suits the end user choices and the means of distribution. Note that the distribution is called "transparent" because the invention does not impose a particular distribution channel. The concept of "transparency" here relates to the fact that the distribution could be thought as independent from the actual way of implementing it. The distribution mechanism could, in fact, rely on very different forms and does not dictate necessarily the use of any kind of technology used to transfer Digital Data, Digital Goods, Primary and Alternate Contents. Digital Goods, for the sake of clarity and only as a possible example, could be transferred via physical media and Alternate Contents could be transferred via some networking mechanism, without being bound to the present technologies or current protocols, like IP or DVB. New technologies could be taken advantage of in order to conceive a better transport. Those skilled in the art will recognize that the scope of this invention should not be narrowed by the use of any particular transport technology for Primary and Alternate Contents, as well as any information that could be exchanged between the Distribution and the Consumption of Contents endpoints. Step **330** is the part of the process where the consumption of the Alternate Content is metered in order to provide accurate consumption reports to the Alternate Content Provider. Given the profiles built in **320** is it also possible to produce reports against user profiles. Step **335** is the part of the process where the end user, via some device such as, by way of non-limitative example, a computer, consumes the Alternate content and unlocks (at step **340**) the Primary content that will be consumed at step **345**. The process continues until all the Contents are Consumed, as shown by **350**.

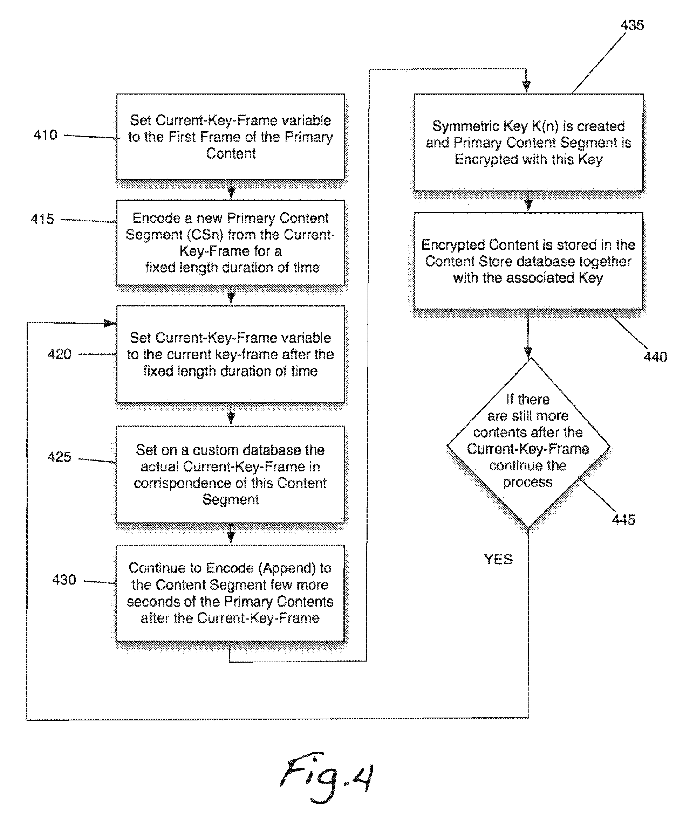

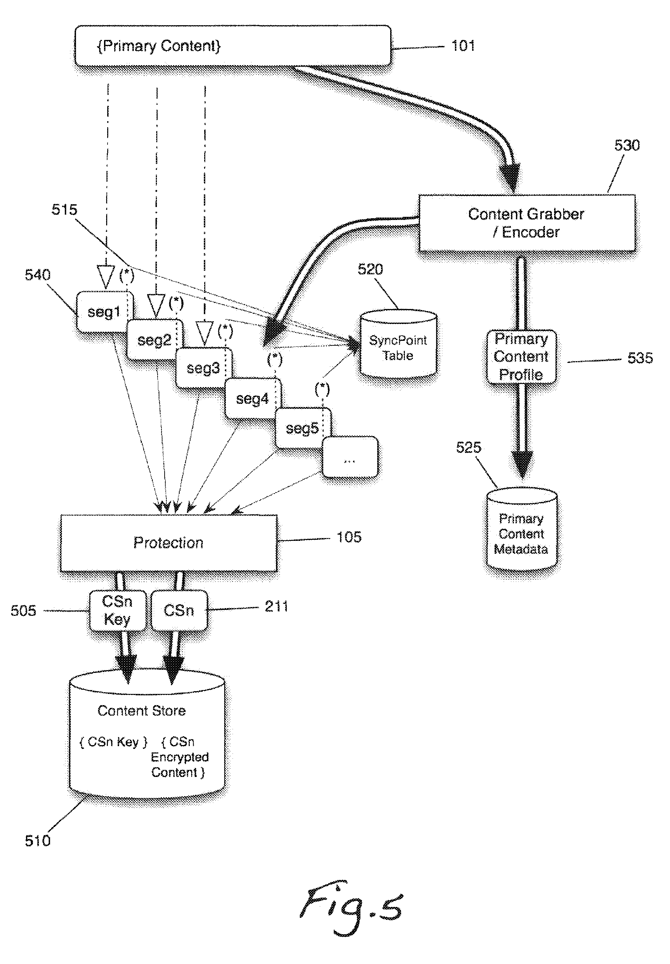

**Fig.4** and **Fig.5** explain in detail the process of creation of a Primary Content. This process could be seen as two main tasks. The first is optional and consist in the splitting of the overall Primary Content in several segments while the second task consist in the protection of the said segments and in the storage of all relevant information into custom databases. The process of splitting allows the insertion of Alternate Contents during the overall end user consumption of the Primary Content. Therefore this optional splitting task could be bypassed and the entire Primary Content could fit as a single segment. The invention does not dictate any mandatory rules when to split or not the Primary Content.

The Original Primary Content **101** could be divided in fixed length Segments **540**. In order to do so a Sync Point table **520** is created, which stores the location where the segments of the Primary Content are to be split. At start-up, the first value points to the beginning of the Primary Content. The process step is **410**. This value is then passed to the process **530** that encodes a fixed length of the Primary Content (this could be, for example, a fixed number of frames in a video content, a fixed length of time, or a fixed number of bytes for a generic Digital Good). This is the step **415**. Following the process in Fig 4, during steps **420** and **425**, the pointer to the end of the encoding of the current Primary Content Segment **515** is stored into a custom Database **520** and a small additional length to the Primary Content Segment is appended (**430**). Note that this length could also be zero, according to the nature of the digital good. The process at this point creates a Key **505** in order to protect the Primary Content Segment **211**. This was step **435** in the process flowchart **Fig 4**. The resulting protected Primary Content Segment **211** and the corresponding Key **505** are stored in the Content Store Database **510**. This is step **440** of the process. This encoding process continues until all the Primary Content is divided in segments. At the end of the process -- exit from the loop **445** -- all the pertaining and relevant information regarding the Primary Content and its processed output are stored into the database 525. From now on, the set of these relevant information will be referred as *Metadata* or also *Primary Content Profile.* The term Metadata will refer also to Alternate Content, and will be also referred to as Alternate Content Profile.

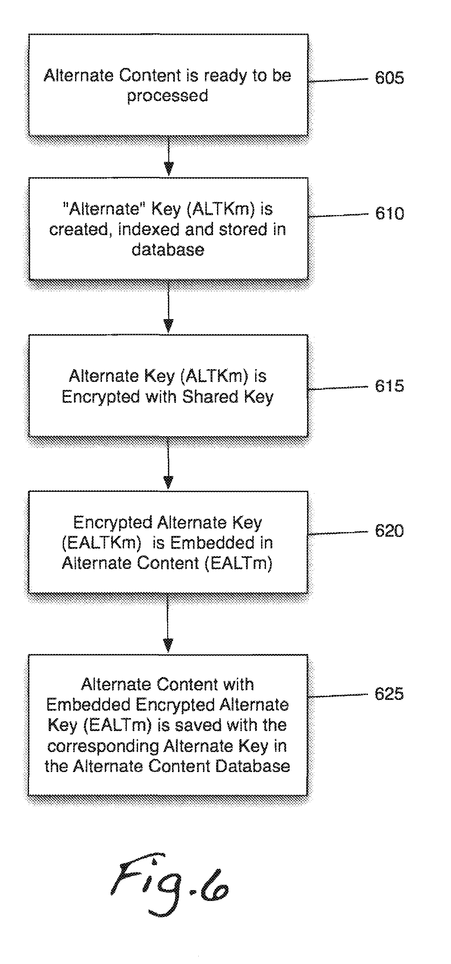

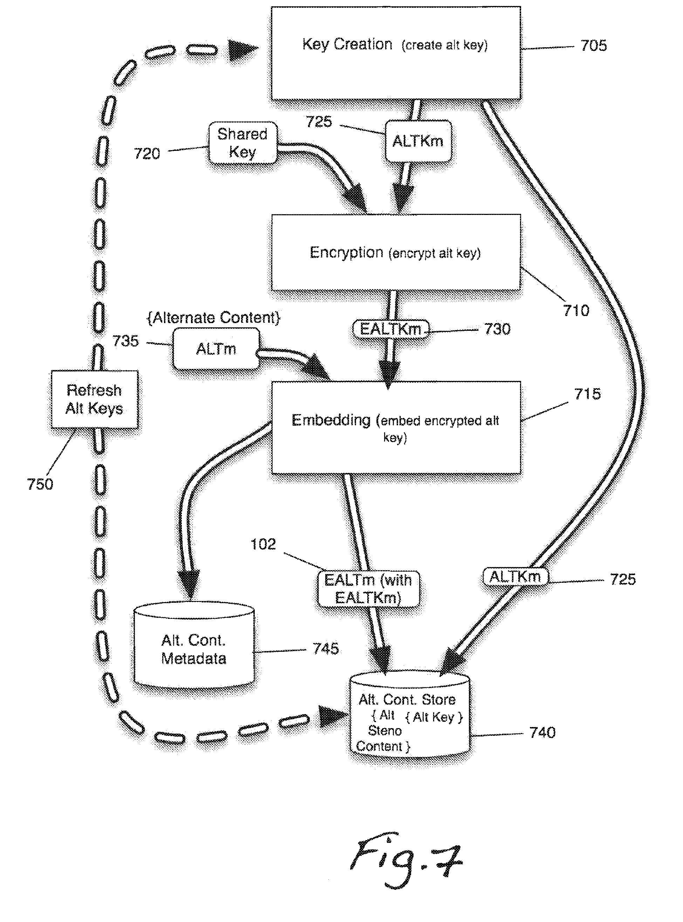

**Fig.6** and **Fig.7** refer to the process of creation of Alternate Content. Once the Original Alternate content **735** is ready to be processed, at step **605**, a Key **715** related to the alternate content **735** is created and stored in database **740** (step **610**). The Key **715** is encrypted with a Shared Key **720** (Step **615**) and the result is the Encrypted Key **730**. Step **620** of the process is the embedding of the Encrypted Key **730** into the Original Alternate Content **735**, thus obtaining the alternate content **102**. This is done via any technique **715** that could do so. For the sake of clarity one example of such embedding process could be the use of steganography, but the scope of this invention is not limited by the use of one particular embedding technique. It should be noted here that in this case the process of embedding is spread across the full length of the Alternate Content. The final step of the process **630** is storing the alternate content **102** into the Alternate Content Store Database **740**. Alternate Content Metadata are stored into the **745** Alternate Content Metadata Database. In **Fig. 7** there is also a special process **750** asynchronous w.r.t. the Alternate Content Acquisition process, whose task is to take care of refreshing the Keys **725** already used and expired, and thus triggering the re-embedding. As a general rule it is always convenient, for security reason, to set a time limit to keys and expire them.

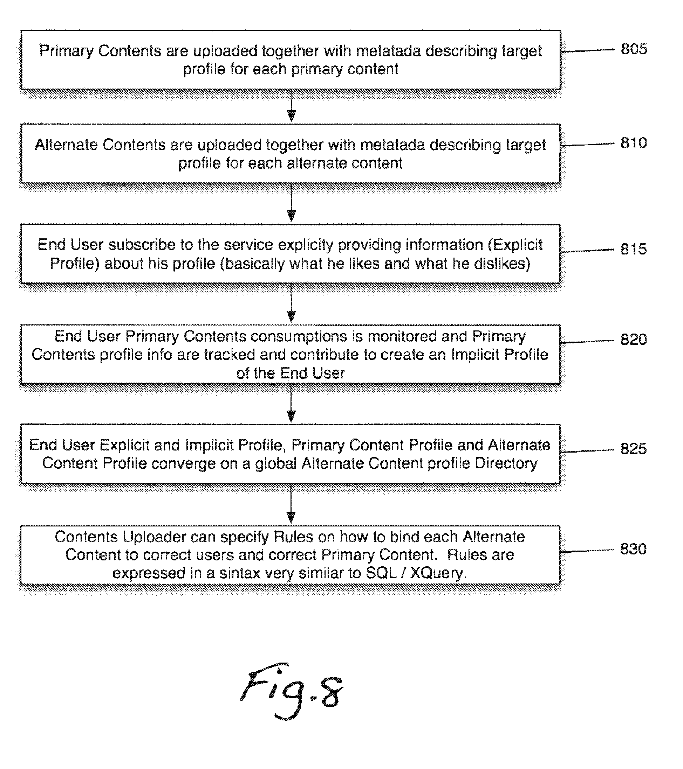

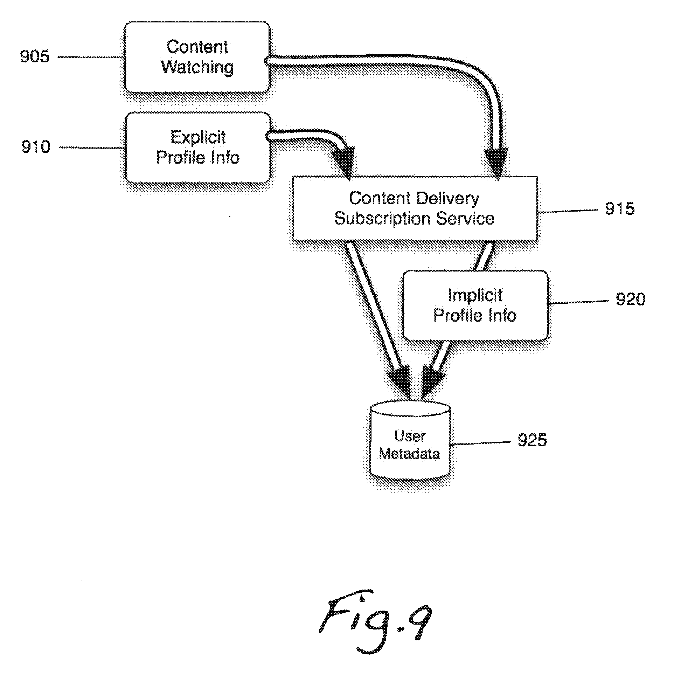

**Fig.8** and **Fig.9** explain the processes of building and accessing a Generalized User Profile Database that is cited in step **320** of general process described in **Fig.3****.** The End User subscribes to a service providing the Digital Goods by explicitly providing information about his/her profile **910** (basically specifying all the relevant information about the preference of some kind of Digital Good with respect to others) into a subscription/profiling service **915**. The update of this profile could be done at any time during the term of the subscription of the service and the service itself could be implemented in any kind of form, like for example, but not limited to, a portal or any other suitable information input mechanism. This is step **815**. Via any suitable device or process, the consumption of Digital Goods (Primary Contents and Alternate Contents) is monitored and recorded -- in a way that is compliant with local legislation about the treatment of personal information -- in order to provide additional information during the process **905** of consuming Digital Goods, which could be used in order to build an Implicit User Profile **920**. This process completes step **820**. The next step **825** is the convergence and creation of a generalized User Profile Database **925**. This database could be used to provide data to (complex) business rules that, in turn, could help associate an appropriate Primary Content with Alternate Contents according to End Users' preferences. This database could be made available using any suitable interface, and rules could be build using any suitable syntax.

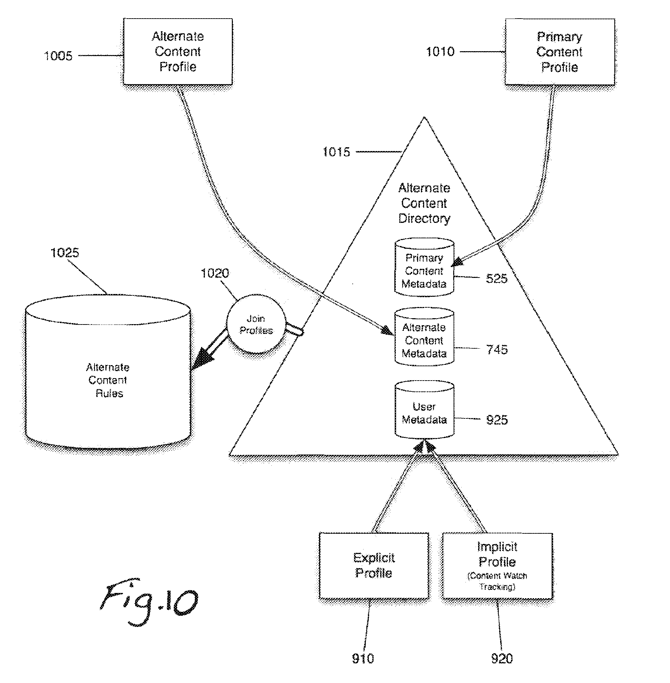

An overall picture of this architecture is depicted in **Fig.10**; this picture could be viewed as an high level overview of the whole "infrastructure" that is needed in order to set up such capability. The Database **925** is adapted to store the user profile built via the entire process of **Fig.8****.** Furthermore the directory **1015** is also composed by the databases built during the entire processes of **Fig.5** and **Fig.7**, that is databases **525** and **745**, adapted to store, respectively, Primary Content Profiles **1010** and Alternate Content Profiles **1005**. Through the database **1025**, that is fed by the join profiles stored in directory **1015** and by business rules, it is possible to query, via any suitable query language, what is the more appropriate Alternate Content matching with a particular Primary Content and User Profile. These rules could be expressed in a form of Query using a "language" similar to the Structured Query Language (or SQL for short). As a non-limitative example, a rule expressed in this language could look like the following statement: *"Select Top Advertise Where Advertise_Profile *Match*User_Profile Or Advertise_Profile *Match*Content_Profile".*

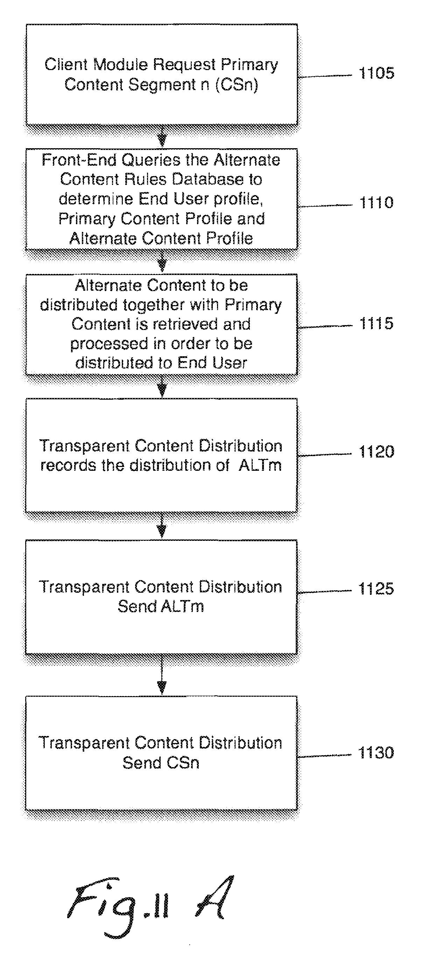

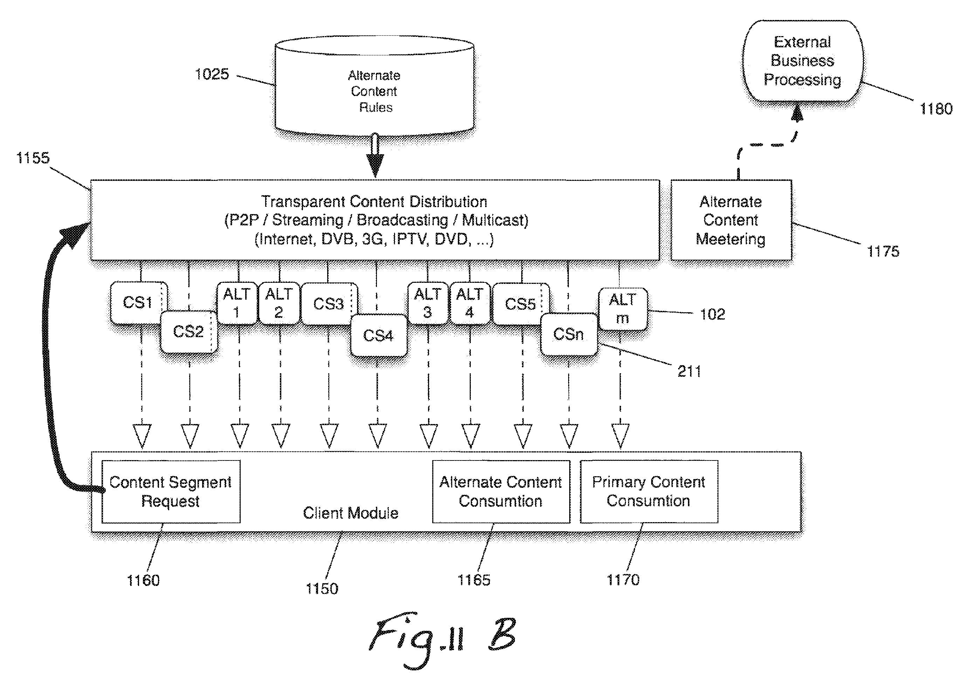

**Fig.11A** and **Fig.11B** depict the process of distributing the "composite" Content to be sent via the Transparent Content Distribution. Step **1105** is the client module requesting Content Segment **211**. Transparent Content Distribution **1155** queries the database **1025** to determine which is the best Alternate Content **102** to be distributed to End User in steps **1110** and **1115**. The distribution of Alternate Content **102** is recorded via a metering process **1175** for further use by external Business Processing Systems **1180**. After this step (**1120**) of the process is completed, step **1125** comprises sending the alternate content **102** and Primary content Segment **211** to the client module **1150**, requested by the appropriate module **1160**. It is to be stressed again that the methods used by the Transparent Content Distribution do not impose, by their nature, any constraints on the way in which Primary and Alternate contents are assembled, packaged and Distributed to the Client Modules **1150** to be consumed by sub modules **1165** and **1170**. Also, the client module is a program segment that could be implemented in a variety of devices and/or Computer Clients, according to the specific needs. The choice of the implementation of the Client Module **1150** should not limit or narrow in any way the scope of this invention.

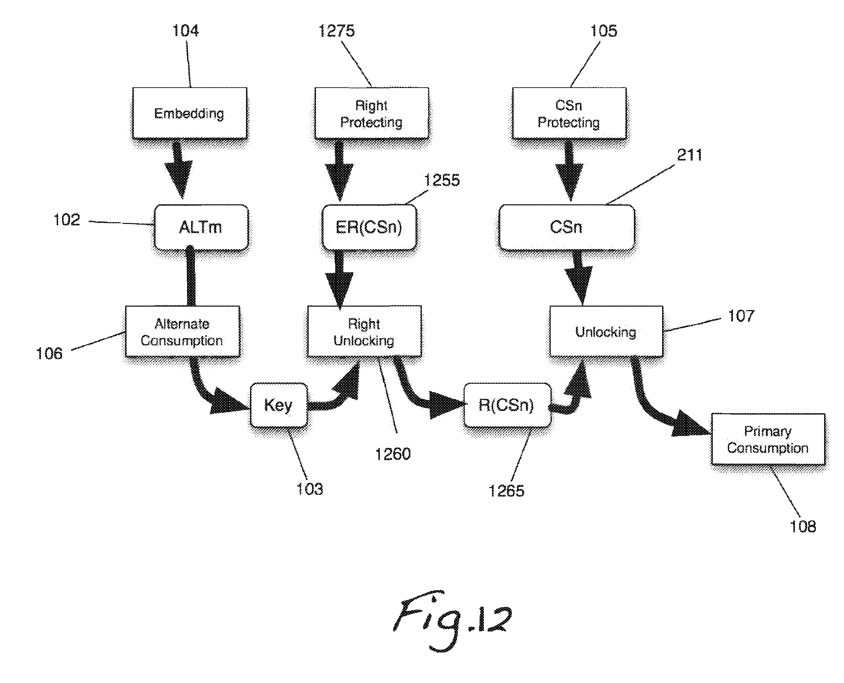

**Fig.12** deals with adding the concept of digital "Right" **1265** (as in Digital Right Management) in the precedent embedding and protection chain described in **Fig.1A****,** through a schematic representation generally referred to with numeral **1250**. The Right to decrypt a particular primary content segment n **211** is generated at runtime during the request of the content segment CSn using standard DRM technique. The Right is encrypted in process **1275** with the same Key **103** embedded inside the Alternate Content **102**, and the resulting Encrypted Right **1255** is distributed via the transparent content distribution **1155** to the end user together with the primary and alternate contents CSn and ALTm. On the client module, once the de-embedding process **106** obtains the Key, the Encrypted Right is decrypted via process **1260** with this one and the standard DRM Right **1265** is obtained in order to unlock via process **107** the Primary content segment.

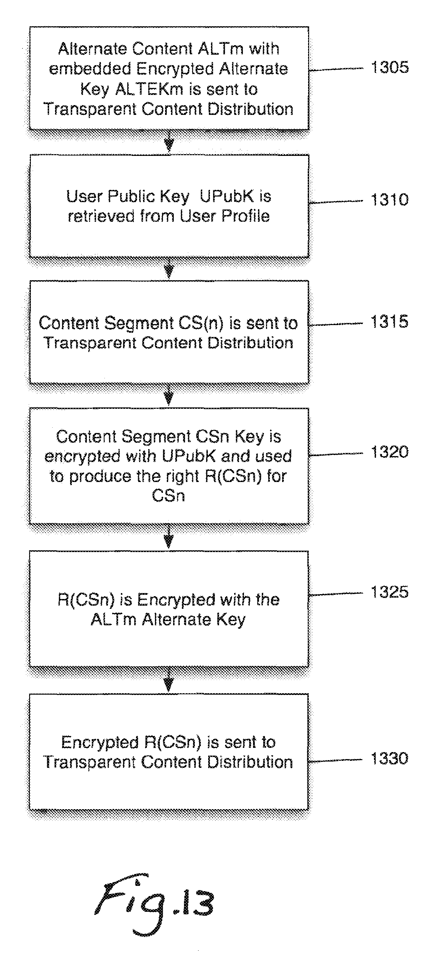

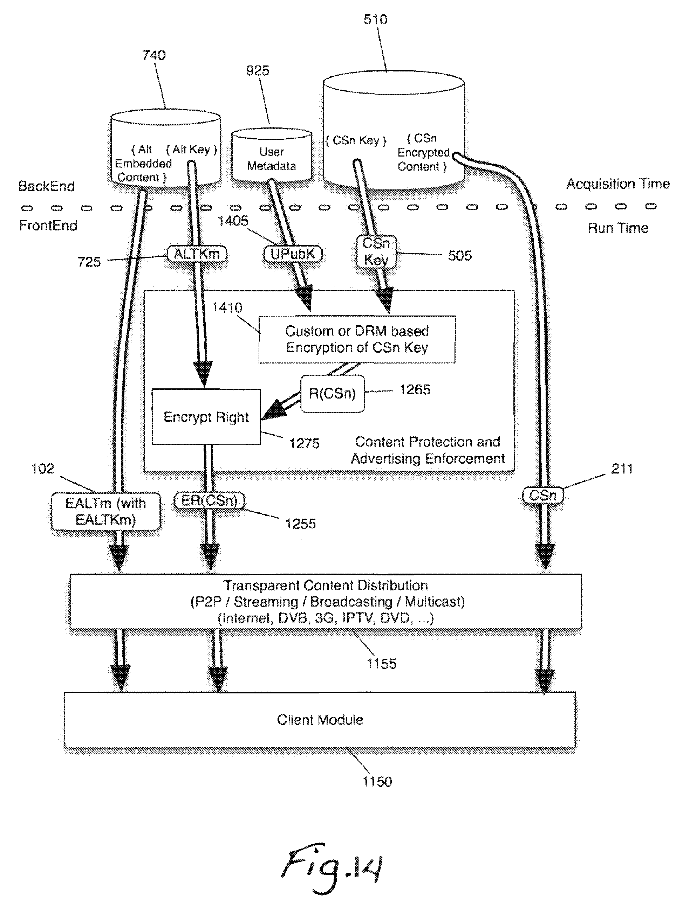

**Fig.13** and **Fig.14** show the process of distributing the right of consuming Primary Content Segment n **211** to the Client Module **1150**. In the first step **1305** the alternate content **102** is retrieved from the store **740** and is sent via Transparent Content Distribution **1155** to the Client Module **1150**. From User Metadata Database **925** the User Public Key **1405** is extracted during step **1310**, while in step **1315** the Encrypted/Protected Primary Content Segment n **211** is extracted and distributed to the Client Module **1150** via the Transparent Content Distribution **1155**. The next step **1320** comprises extracting the CSn Key **505** from the database **510**. Key **505** is the basic component for building the Right **1265** to consume Primary Content Segment CSn **211**. To those skilled in the art it will be clear here that the invention does not rely on any particular Digital Right Management solution, either on the market or yet to be invented; it relies only on the general terms of Primary Content and its associated Right to be consumed. Consumption could mean any possible action with the Digital Good permitted in accordance to the Digital Right Management solution/technology adopted. The key **1405** is employed to build a Right, specific for the User, to consume the Primary Content Segment CSn, labelled **1265**. This Right is further encrypted (**1275**) with the key **725** extracted from the database **740**, thus producing the Encrypted Right **1255**, as in step **1320**, that will be distributed via the Transparent Content Distribution **1155** to the client module **1150** in step **1330**.

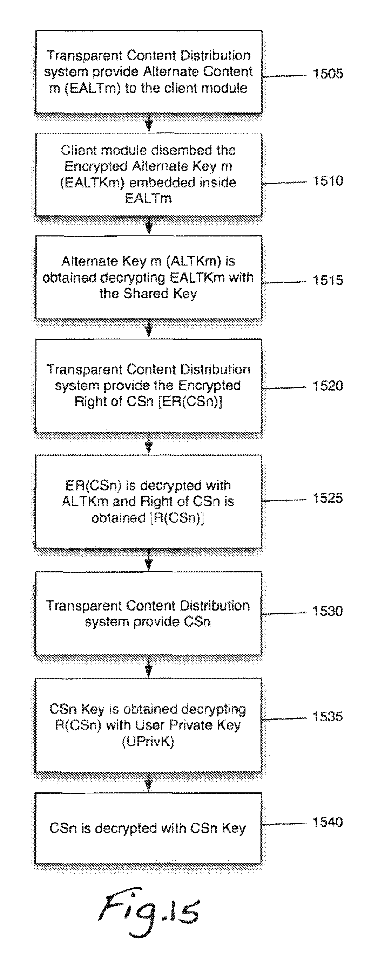

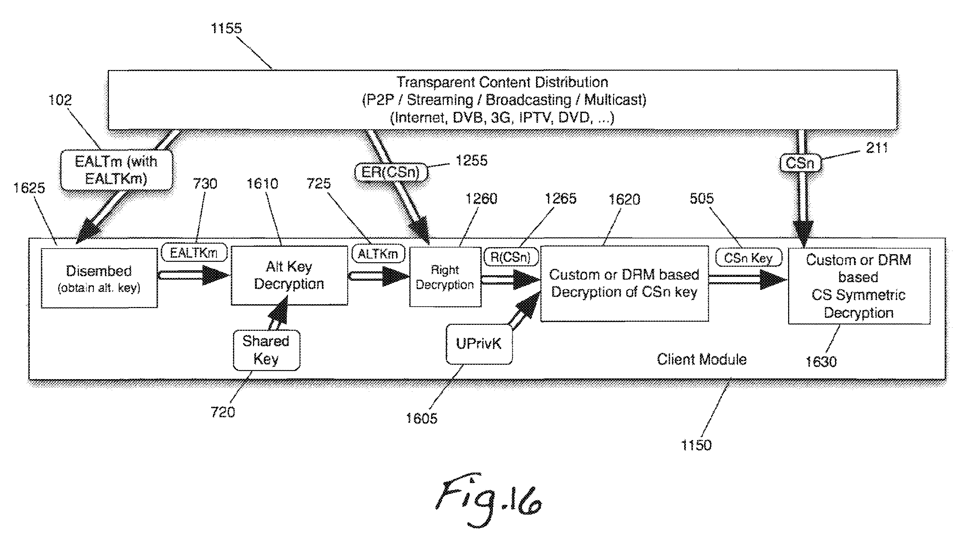

**Fig.15** and **Fig.16** show the process of consuming the Alternate Content in order to retrieve the right to consume the Primary Content Segment CSn **211**. In step **1505** the client module **1150** receives the Alternate Content **102** with the embedded Encrypted Alternate Key **730**. In step **1510** the Client module **1150** consumes the alternate content **102** obtaining, at the end of the consumption, the Key **730** via the de-embedding process **1625**. In step **1515** the same key is decrypted via the use of the shared key **720** through module **1610**. Shared key **720** is the same key **725** used for encryption. Once the Encrypted Right **1255** to consume the Primary Content Segment n is available at the client (step **1520**) it is decrypted (**1260**) in step **1525** using the key **725** obtained in step **1515,** thus obtaining the Right **1265**. In step **1530** the Protected Primary Content Segment **211** is available at the Client Module **1150** and ready to be consumed. In step **1535** the symmetric key **505** is obtained by the custom or DRM based decryption process **1620** from the Right **1265**, processing it with the End User Private Key **1605**. End User Private Key **1605** is matched with End User Public Key **1405** and both are generated during the End User Subscription step **815**. Finally, in step **1540**, the Primary Content Segment CSn **211** is unlocked for the intended consumption using the key **505.**

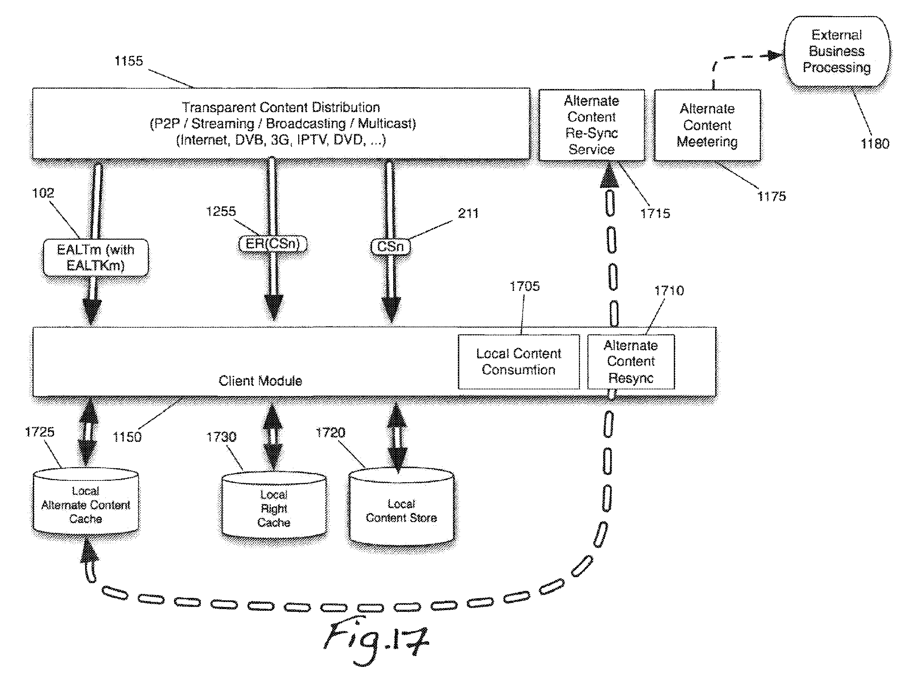

**Fig.17** details aspects of the client module **1150**. All the Alternate Contents **102** can be stored into a local store **1725**, while all the Primary Content Segments **211** could be stored into a local content store **1720** in order to allow the consumption of the Primary Contents at a different time when the Primary Content is received. There is also a Local Right Store **1730** adapted to store Encrypted Rights **1255** for the Primary Content Segments **211**. One example of a Local Content Store is an optical disk reader together with any recording device (memory, hard disk etc), in order to feed the local content consumption process **1705**. In this way the Transparent Content Distribution **1155** attains its full capacity of *transparency.* The choice of a particular technology for the local content store should not limit in any way the scope of this invention. The Primary Content, stored into the store **1720** then, could be consumed even if the client module, at the time of consuming, has no direct connection to the Transparent Content Distribution **1155**. Note that the presence of the three different storage areas **1720, 1725, 1730** allows for the Consumption of the Primary Content Segments in a variety of different scenarios with the greatest possible flexibility: for example, the end user could pre-load all the Alternate Contents and/or Encrypted rights needed to consume the Primary Content Segments at a later time, when no connection with the service is available. In **Fig.17** it is also depicted the Alternate Content Re-sync process **1710** whose purpose is to connect with the Alternate Content Re-Sync Service **1715** and refresh the content of the local Alternate Content Cache **1725** if the Alternate Content **102** needs to be changed or has an expiry date.

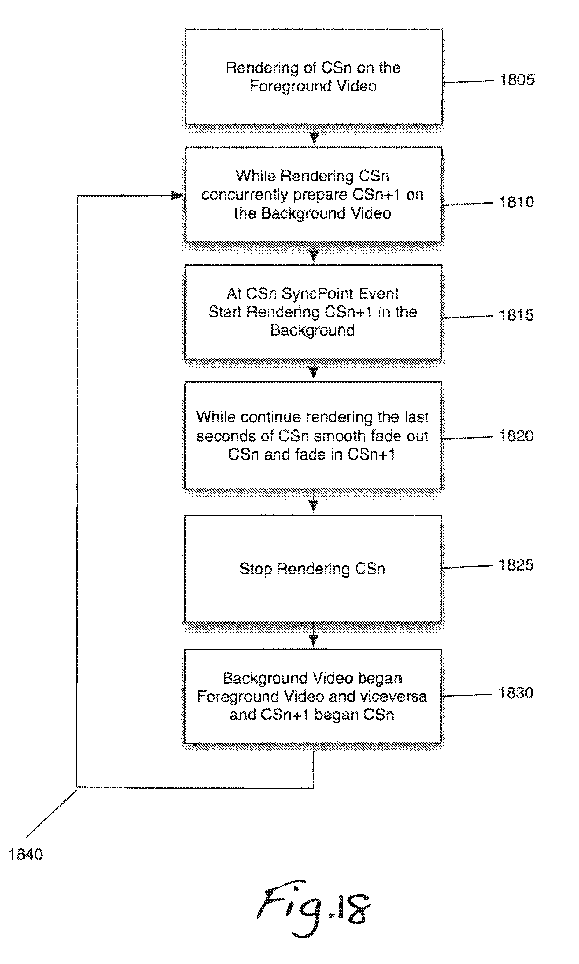

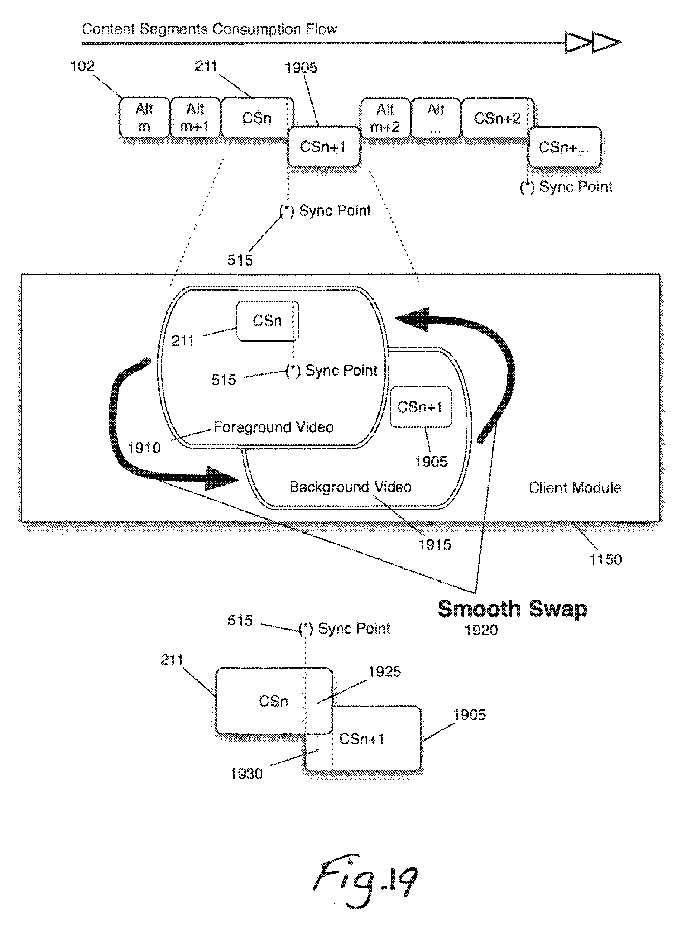

**Fig.18** and **Fig.19** show a process of smooth migration **1920** during the phase of consumption of two subsequent primary content segments **211** and **1905** in the scenario where no alternate contents **102** are placed in the middle of these two segment. In this specific scenario, the first step **1805** describes the process of rendering a particular content segment **211** to the display. This rendering process is handled by the client module **1150** loading the current content segment **211** on a Foreground video **1910** rendering engine that is actually used by the video rendering engine such as a video player module. While current segment is rendered to the user, the system prepares the subsequent unlocked content segment **1905** loading it on a Background video **1915** rendering engine as described in step **1810**, in order to smoothly play the subsequent segment **1905** after the end of the current content segment **211** without any perception for the end user of the segmentation process and the split between current content segment **211** and the subsequent segment **1905**. Once the foreground video **1910** rendering engine recognizes the Sync Point **515** event signalling the start point of the subsequent content segment, the Smooth Swap process **1920** begins. As in step **1815** this event instructs the Background video rendering engine **1915** to start rendering the subsequent content segment **1905**. In step **1820** the Smooth Swap process **1920** is described using fade-in and fade-out techniques in order to smoothly close the current content segment **211** and substitute it on the screen with the subsequent content segment **1905**. Audio and Video can eventually fade-in and fade-out at different times. The presence, at the end of the current content segment **211** after the Sync Point event **515**, of few seconds **1925** of the beginning of the subsequent content segment **1905** allows the client module **1150** to run the Smooth Swapping process **1920** during this time of content duplication in the two segments. At the end of the Smooth Swap **1920** process the current content segment is closed as in step **1825**. Finally, the client module **1150** swaps the two rendering engines. The currently rendering Background video **1915** engine becomes the Foreground video engine **1910** as well as the loaded subsequent content segment **1905** becomes the current content segment **211**, as in step **1830**. If there is yet another primary content segment next to the current one, without any alternate content **102** in between, step **1840** occurs and the system is restarted from step **1810**.

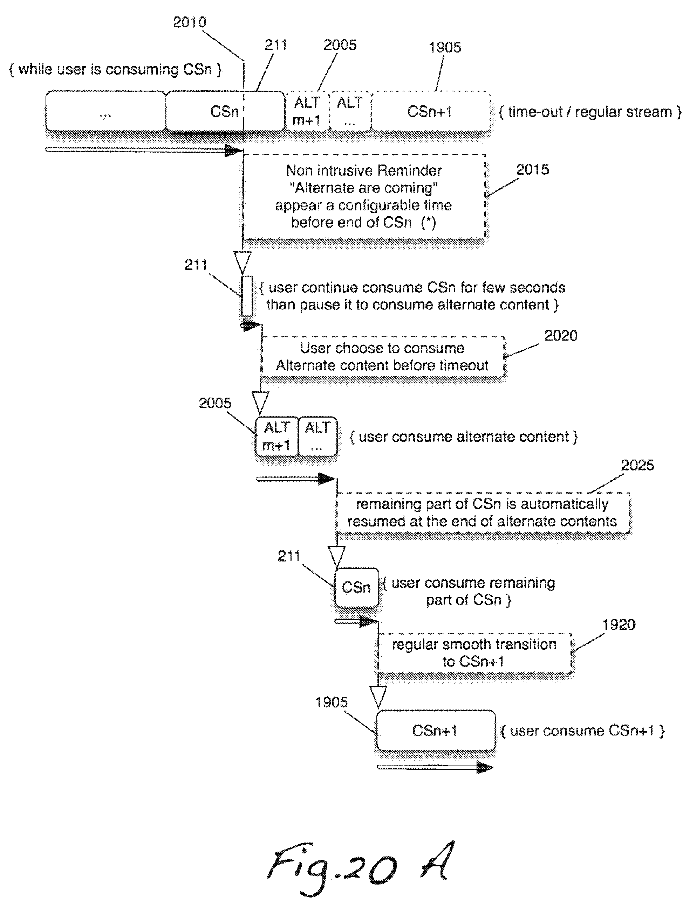

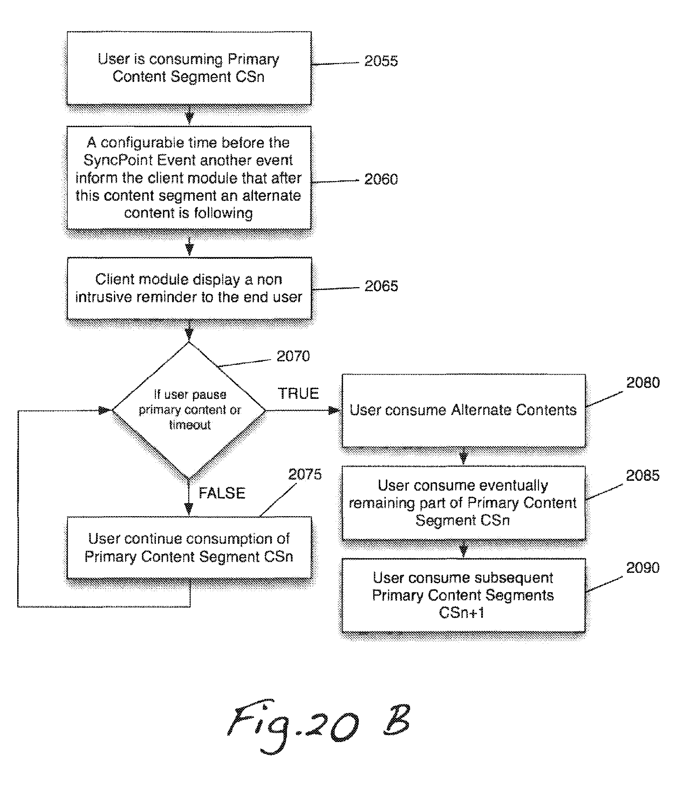

The flow diagram described in **Fig.20A** and the related block diagram in **Fig.20B** show the ability for an end user to determinate, during the consumption of a primary content segment **211**, when to consume the alternate contents **2005** before being allowed to continue consuming the next primary content segment **1905**. In this scenario during the consumption of a primary content segment n **21**1 as in step **2055** an event **2010** is handled by the client module in the step **2060** a configurable time before the Sync Point event and therefore before the end of the consumption of the content segment. In step **2065** the client module displays to the end user a non intrusive reminder **2015**. For example, this can be implemented as a semi-transparent pop-up on a corner of the content rendering screen or it can appear even before as a progress bar indicating how many content watching time is available before user has to consume alternate contents. In the latter case the side bar can even be activated directly by the user and it can even display graphical and numeric information. In Step **2070** the end user chooses as in **2020** to pause the current content segment **211** and consume alternate content just few seconds after the **2010** event and continues consumption of current content segment **211** as in step **2075**. After the consumption of alternate contents **2005** in step **2080** the end user resumes (**2025**) the consumption of the remaining part of the current primary content **211** as in step **2085**. Finally, in step **2090** after the SyncPoint event the regular Smooth Swap **1920** processes smoothly migrate to the consumption of the next content segment **1905**.

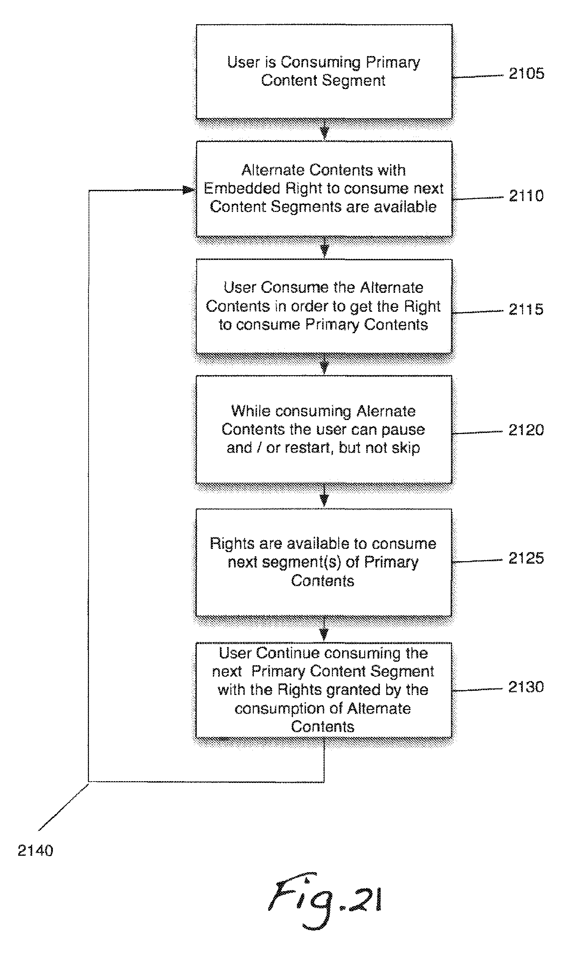

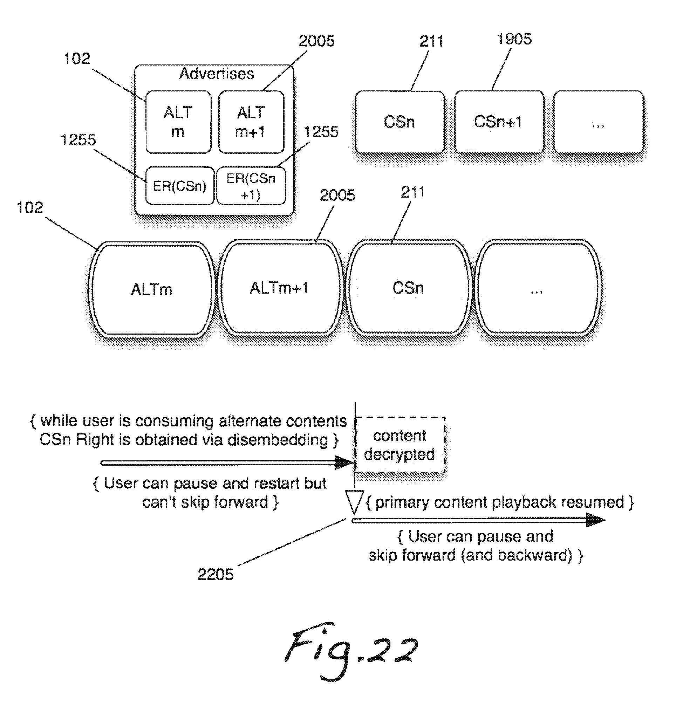

**Fig.21** and **Fig.22** show the process and diagram performing a "Simple Enforcement Mechanism". It is called "simple" because it relies only on the technological components and it works without requiring any particular user interaction. The process begins with the user, at step **2105**, consuming a Primary Content Segment. The Alternate Content ALTm **102** and ALTm+1 **2005**, together with the embedded encrypted rights ER(CSn) and ER(CSn+1) **1255** adapted to allow the consumption of Primary Content Segments CSn and CSn+1 respectively, are available at step **2110**, while at step **2115**, the user interrupts the Consumption of Primary Content and begins the consumption of Alternate Contents in order to obtain the Rights to consume next primary content segments CSn and CSn+1. This interruption is marked by label **2205** in Fig. **22**. During step **2120** the user is consuming the Alternate Contents, and he cannot skip the consumption of this Alternate Content, in order to obtain the rights to consume next segments of Primary Contents. Some actions could be allowed, like pausing the consumption and restarting it, while some other are not, like skipping the remaining consumption. Note that the list of allowed or forbidden user actions is intended only for an exemplary purpose and not to limit the scope of the invention. The right to consume any Primary Content Segment is obtainable only by consuming the corresponding alternate content in its entirety. At step **2125** the rights are available to be further processed and used in order to consume next Primary Content Segment(s). At step **2130** the user is consuming new Primary Content Segments according to the obtained rights. The process is repeated (**2140**) until all the Primary Content is consumed, or the user decides to stop it.

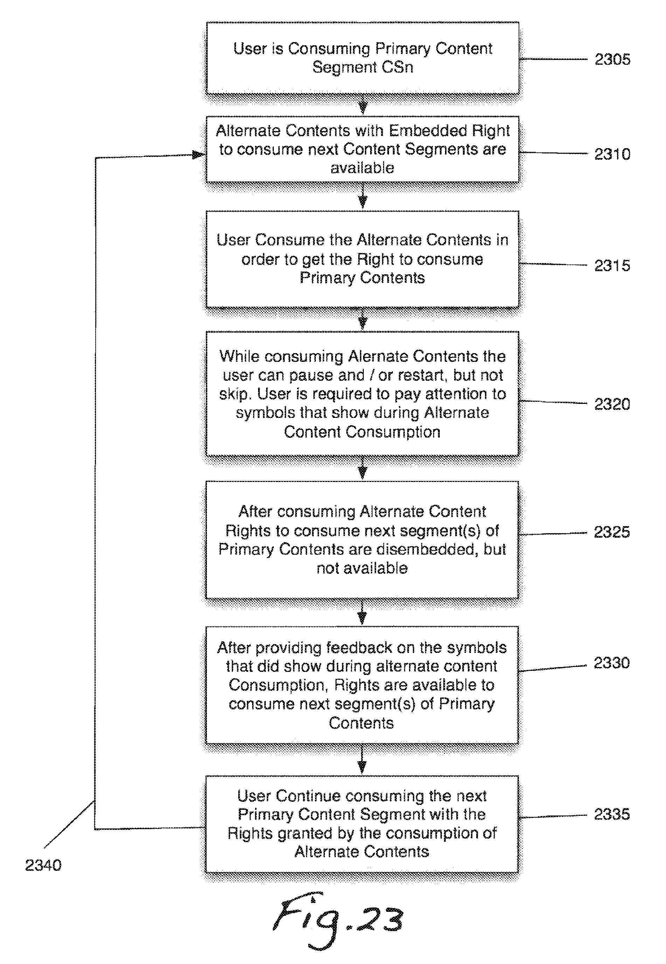

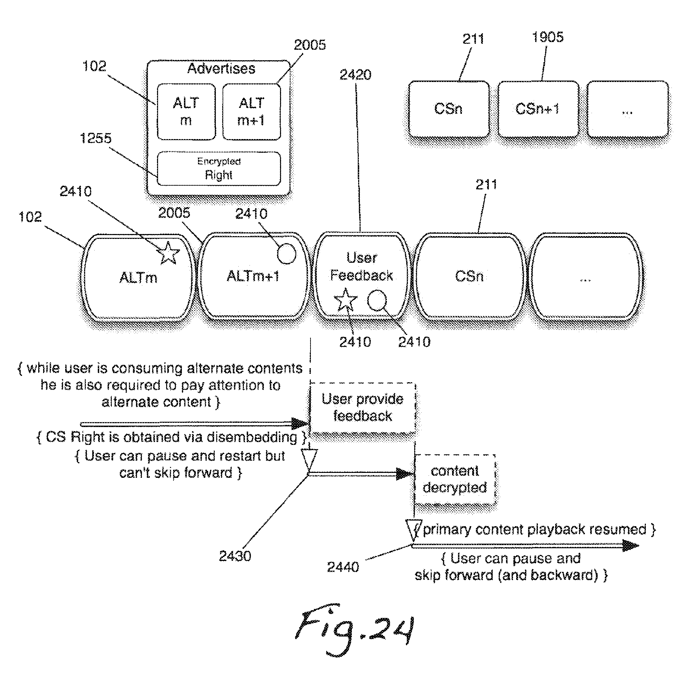

**Fig.23** and **Fig.24** show instead the process and diagram performing a "Strong Enforcement Mechanism". It is called "strong" because it requires user interactivity other than the one that is required to consume Primary and Alternate Contents. Step **2305** of the process is referring to the user consuming a Primary Content Segment. During step **2310** Alternate Content ALTm and/or ALTm+1 (**102** and **2005** in Fig. **24**) with embedded encrypted rights to consume Next Primary Content Segments, like **211** or **1905**, are available. Alternate Contents for strong enforcement contain some additional information **2410** that will be shown during the Consumption of the Alternate Content itself in a suitable way. It is not the scope of this invention to specify the way in which this extra information is delivered to the user, nor the Invention itself should be narrowed in scope by referring to any possible examples used to further explain the process. For the sake of clarity, one possible example could be considered a particular symbol appearing on a consuming device during the Alternate Content consumption, for a certain amount of time. In step **2315** the user consumes the Alternate Content in order to de-embed the Encrypted Right ER(CSn) to consume the Primary Content Segment CSn (or ER(CSn+1) for content CSn+1). This process is marked in **Fig.24** between the two labels **2430** and **2440**. While consuming these Alternate Contents, at step **2320** of the process, the user is asked to pay attention to the symbols **2410** that are presented during consumption. After the consumption of the Alternate Contents, at step **2325** of the process, the Encrypted Rights to consume next segments of Primary Contents are de-embedded from the Alternate Contents, but still not available to grant the consumption itself. In step **2330** the user is required to provide a feedback regarding the special information **2410** provided during the consumption of the Alternate Contents **102** and/or **2005**. After this feedback is provided (label **2440** of **Fig.24****),** at step **2335** of the process, the Rights to consume Primary Content Segments are granted and the user may continue the consumption of Primary Content Segments CSn **211** and/or CSn+1 **1905**. The process is repeated, through step **2340**, until all the Primary Content is consumed or the user decides to stop it.

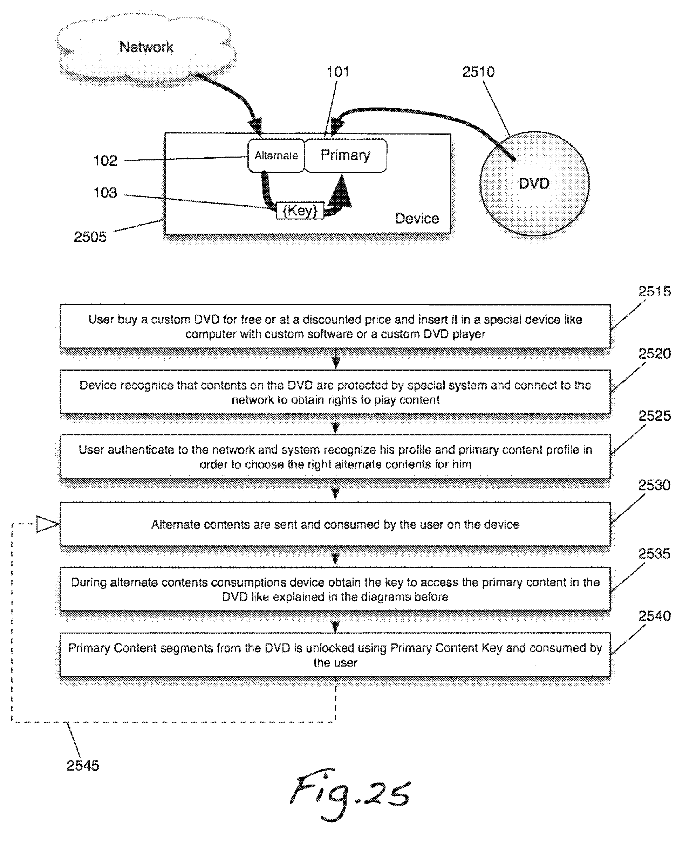

In order to further explain the field of application for this invention reference is herein made to **Fig.25****,** **Fig.26****,** **Fig.27** and **Fig.28****.**

**Fig.25** shows a scenario for the application of this invention where the Primary Content is a multimedia presentation that does not need to be distributed over some transmission network. A user purchases a custom DVD (or any other physical storage media) **2510** at a discounted price, or get it even for free, and insert it into a Custom DVD player/device **2505** that could be also a software program running into a computer. This is step **2515**. In step **2520** the device (or the software) **2505** recognizes that the Primary Content into physical media is protected and connects to a transmission network in order to obtain the rights to play the content. The user authenticates in step **2525** to the network and a system get the user's profile and the Primary Content profile in order to choose the appropriate Alternate Content to send back to the device **2505**. At step **2530** the Alternate Contents are sent and consumed by the user via the device. After the consumption of alternate contents, in step **2535**, the device has available the keys to access the Primary Contents in the physical media. Step **2540** represents the unlocking and the consumption of Primary Contents stored into physical media **2510** by the user. The process from step **2530** is repeated until all the primary content is consumed or until a stop command by the User.

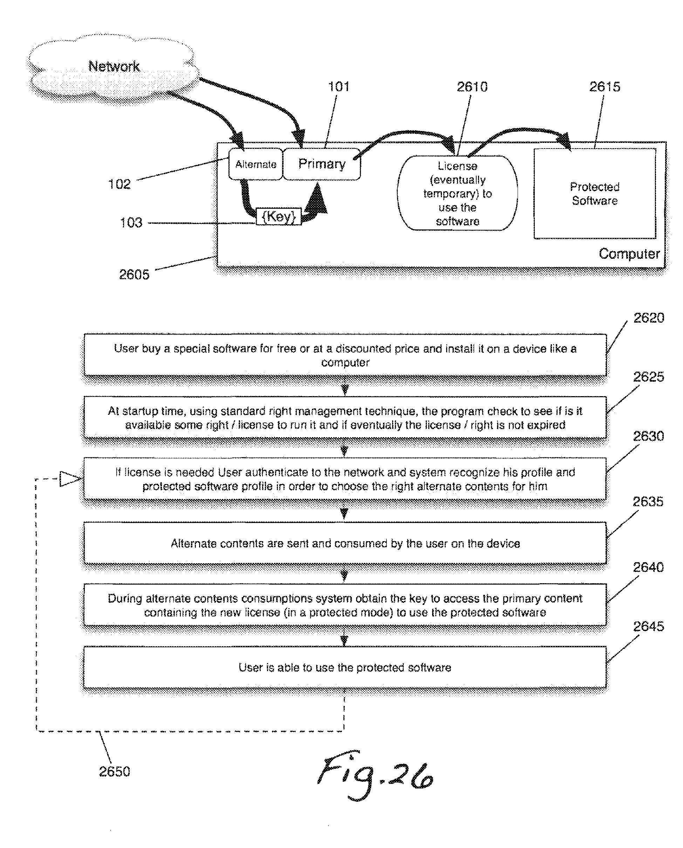

**Fig.26** shows another scenario where the primary content is a special software or computer program **2615** to be installed and executed in a device **2605** like, for example, a computer. At step **2620** the user gets the program by purchasing it at special discounted price, or for free, and installs it into the computer or device **2605**. During start-up, at step **2625**, the protected software **2615** checks, using any available Rights Managements techniques, if there is a valid license **2610** to use the software, or if has not expired yet. If a new licence is needed, or if the current licence needs to be renewed, the user at step **2630** authenticates to the network and a system recognizes the user's profile and the protected software in order to choose the right Alternate Content to be consumed. In step **2635** the Alternate Contents are consumed by the user via the device **2605**, and at step **2640**, after the consumption of Alternate Contents, the key to access the Primary Content is available. The primary content, in this case, is represented by the renewal of the license **2610** or a new licence. Of course, any protection mechanisms to protect the misuse of the newly obtained licence are applicable as well, as dictated by the Right Management technique used by the Protected Software **2615**. At final step **2645** the user is able to use the protected software **2645**, and the process is possibly repeated from step **2630**, according to the rights of usage of said software

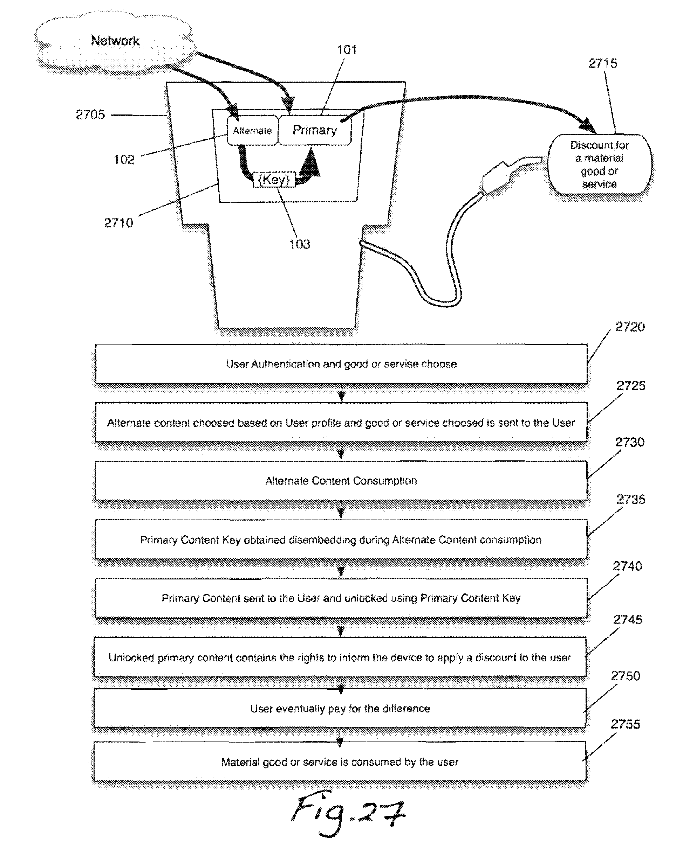

**Fig.27** shows an example of how Primary Contents could be implemented as Digital Rights to gain a discount for the acquisition of material goods and services like refuelling car at a gas station. In this scenario a Gas or Petrol Pump **2705**, connected to a network like Internet, includes a multimedia display **2710** where user can choose to consume an Alternate Content **102**, like for example an advertise commercial, in order to obtain a Key **103** to unlock a Primary Content **101**, e.g. representing some special instruction for the Gas Pump **2705** to apply a discount **2715** for the delivery of gas. In Step **2720** the end user, while choosing the fuel service that he wants to buy, can also choose to consume alternate contents **102** while waiting for the service and authenticates to the system using the display **2710.** End user authentication allows user profile recognition in step **2725** in order to make the system choose the right alternate contents for him. Step **2730** illustrates the process of reception of alternate content **102** and user consumption thereof, and step **2735** shows the process of de-embedding and obtaining Key **103**, as previously described. In step **2740** the primary content **101** is received by the gas station **2705** and unlocked using the key **103** as previously described. The obtained unlocked primary content in step **2745** is adapted to instruct the gas pump **2705** to apply a special discount for the service. Finally, in step **2750** the end user pays for the final price and in step **2755** obtains the refuelling.

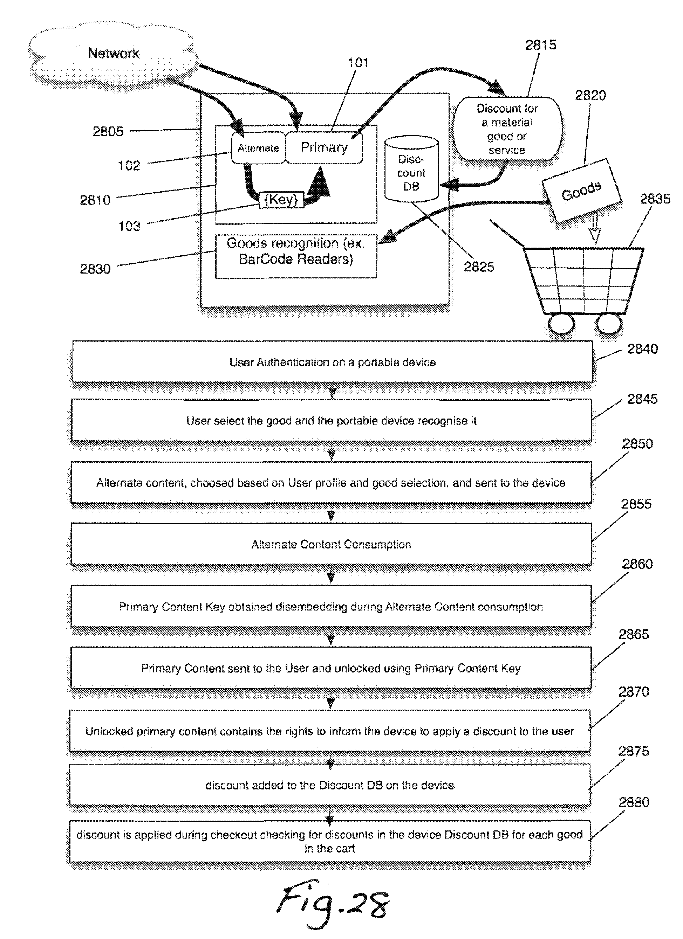

**Fig.28** shows an example of how Primary Contents could be implemented as Digital Rights to gain a discount for the acquisition of one or more material goods at a wall-mart, drugstore or shopping centre. In this scenario an end user can use an owned portable device **2805** like a mobile phone with special software, or he may rent a specific device **2805** from the shop. The device **2805** could be even integrated inside a cart **2835**. The device **2805** is adapted to recognize the goods **2820** the user is interested to buy, e.g. by using a component **2830** like for example, but not limited to, a Bar Code reader. This device also contain a multimedia display **2810** where user can choose to consume Alternate Contents **102**. These alternate contents can be advertise commercials or even customer information about the selected goods. The consumption of alternate contents enables the device to obtain a Key **103** to unlock a Primary Content **101** that represents some special instruction for the device **2805** to apply a discount **2815** for buying the selected good. In Step **2840** the end user, while entering a shop, authenticates the device **2805** and connects the device to the shop network. In step **2845**, by choosing the good he want to buy, the user can also choose to consume alternate contents **102** using the display **2810**. Correct alternate content is chosen by the system in step **2850** based on good **2820** selected and optionally using user profile information. Step **2855** illustrates the process of reception of alternate content **102** and user consumption thereof, and step **2860** shoes the process of de-embedding and obtaining Key **103** as previously described. In step **2865** the primary content **101** is received by the device **2805** and unlocked using the key **103** as previously described. The obtained unlocked primary content in step **2870** instructs the device **2805** to collect the discount on a local database **2825** as in step **2875**. Finally, in step **2880**, when the end user checkouts the goods purchased the final price due is calculated checking for each good the presence of a discount in the local database **2825** of the device.

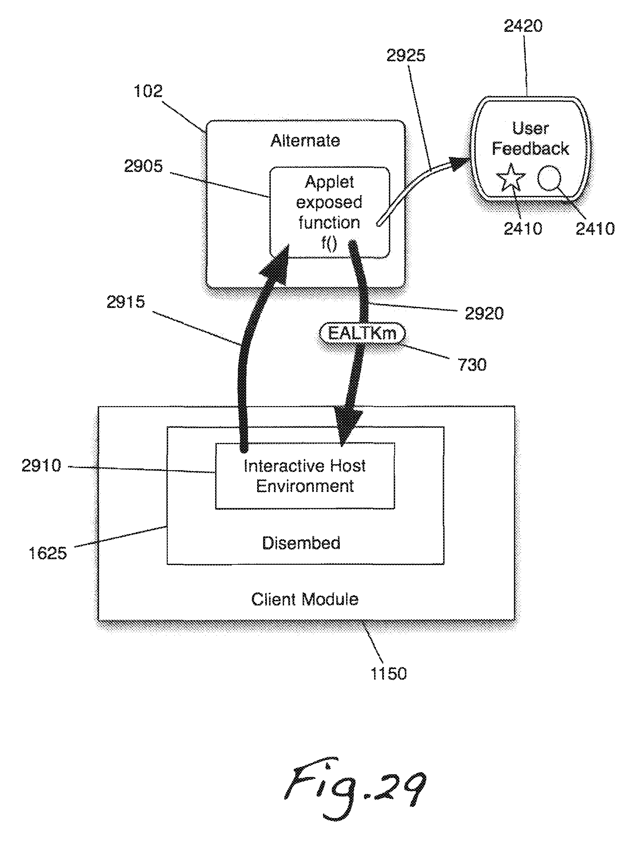

**Fig.29** shows an example of an embedding technique that could be used instead of, or together with, steganography techniques. As previously described in **Fig.6** and **Fig.7****,** the Encrypted Key **730** is generated in the back-end during the process of Alternate Content encoding. In the scenario described herein the alternate content is to be understood not as a simple multimedia content but as a custom software like, for example, an interactive multimedia applet or a control developed with some interactive multimedia environment **2910** like for example Java from Sun Microsystems Inc., Flash from Adobe Systems Inc. or Silverlight from Microsoft Corporation, or any other environment available for the computing and rendering devices used. In this scenario the Encrypted Key **730** could be embedded inside the alternate content **102** in many different ways. It can be simply stored as a variable defined in the source of the applet or, using any different cryptography technology available from the particular interactive multimedia environment **2910**, any suitable way could be employed in order to safely store and embed the key **730** in the alternate content. For example, key **730** could be stored on a different encrypted file stored together with the applet in a unique compressed archive like a ZIP file format. Even a mix of steganography and cryptography could be used in order to embed the key **730** inside the alternate content **102**. Usage of the interactive host environment **2910** allows the de-embedding process **1625** at the Client Module **1150** by accessing (**2915**) a specific determined public function **2905** made available by the applet in order to obtain (**2920**) the encrypted embedded key **730**. This function could also implement any strong enforcement mechanism defined in **Fig.23** and **Fig.24** in order to ask (**2925**) for user feedback **2420** before allowing the return of the key **730** to the de-embedding process **1625**.

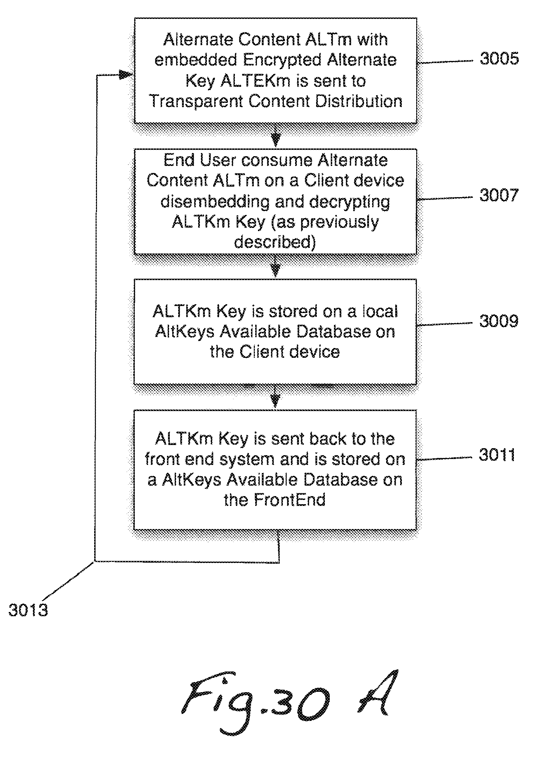

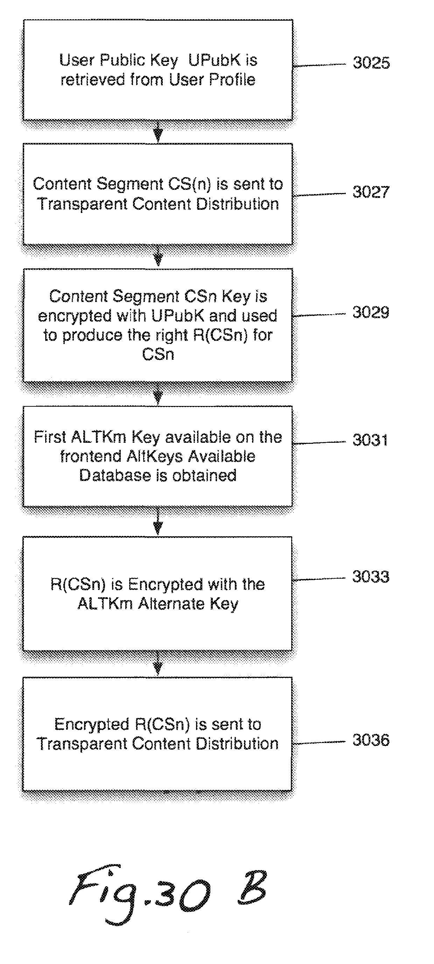

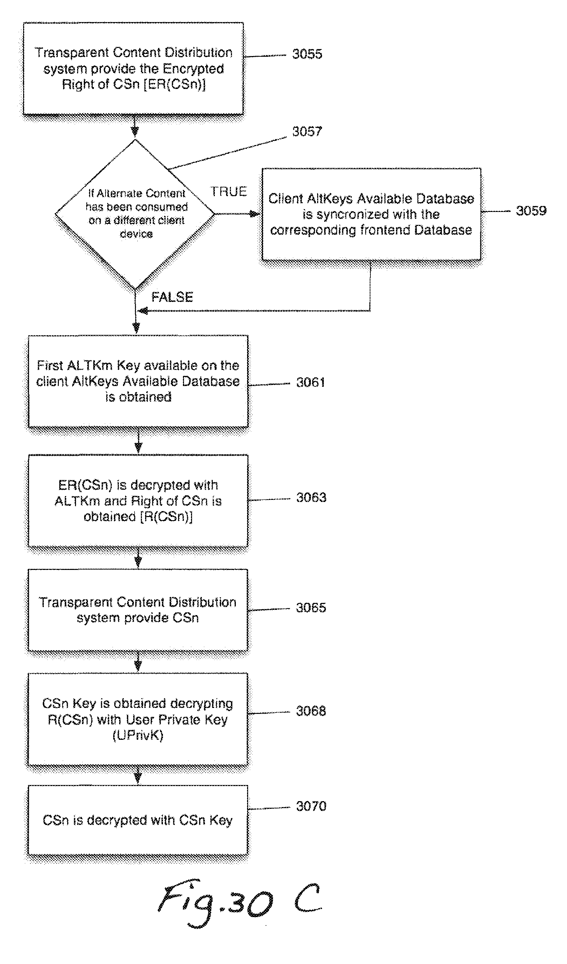

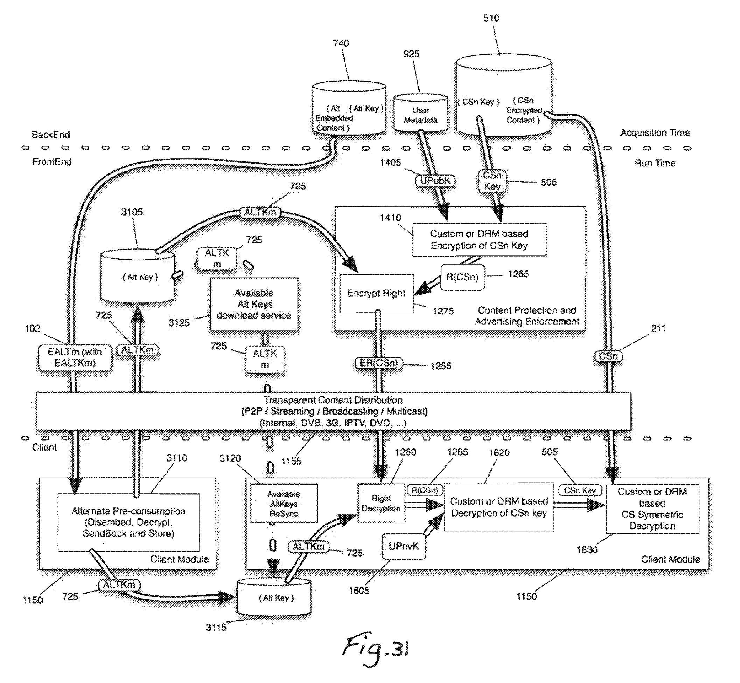

**Fig.30A****,** **Fig.30B****,** **Fig.30C** and **Fig.31** show a method to allow the end user to consume alternate contents in a "preventive" way in order to be able to consume primary contents without interruptions at a later time. This can be seen as an optional behaviour that could enable, for example, two important scenarios. In the first one, parents could choose to watch advertisement commercials on behalf of their children, thus allowing them to watch some Primary Contents without interruptions. The second one is related to what is described in **Fig.27** and **Fig.28** and could allow an end user to consume alternate contents, for example on a portable media player devices or a smart-phone, while waiting for the delivery of any kind of digital or material good or service. The consumption of these alternate contents could be seen not as a method to obtain a discount but as a method to allow lately to consume Primary Contents, like for example watching an entire movie without interruption, on a different client device like a television.

**Fig.30A** and part of **Fig.31** show the process of preventive consumption of Alternate Contents. In the first step **3005** the alternate content **102** is retrieved from the store **740** and is sent via Transparent Content Distribution **1155** to the Client Module **1150**. In step **3007** the Client module **1150** consumes the alternate content **102** using the de-embedding and decrypting technique described in **Fig.15** and **Fig.16** obtaining through the **3110** process, at the end of the consumption, the Key **725**. In step **3009** this key **725** is stored on a local database **3115**, on the client module **1150**, working as a sort of FIFO (First In First Out) cache of available keys. In step **3011** the key **725** is also sent back to the front end service in order to be stored on a server side database **3105** working in the same way as the client database **3115**. At step **3013** the end user can choose to continue the preventive consumption of other alternate contents restarting this process from step **3005**.

**Fig.30B** and part of **Fig.31** show the process of distributing the right of consuming Primary Content Segment n **211** to the Client Module **1150** using the preventive consumption of Alternate Contents. In the first step **3025** the User Public Key **1405** is extracted from User Metadata Database **925**, while in step **3027** the Encrypted/Protected Primary Content Segment n **211** is extracted and distributed to the Client Module **1150** via the Transparent Content Distribution **1155**. The next step **3029** comprises extracting the CSn Key **505** from the database **510**. This key **505** is the basic component for building the Right **1265** to consume Primary Content Segment CSn **211**. To those skilled in the art it will be clear that the invention does not rely on any particular Digital Right Management solution, but it relies only on the general terms of Primary Content and its associated Right to be consumed. Consumption could mean any possible action with the Digital Good permitted in accordance to the Digital Right Management technology adopted. The key **1405** is employed to build a Right, specific for the User, to consume the Primary Content Segment CSn, labelled **1265.** This Right is further encrypted (**1275**) with the first available key **725** extracted from the server side database of available keys **3105** as in step **3031**, thus producing the Encrypted Right **1255**, as in step **3033**, that will be distributed via the Transparent Content Distribution **1155** to the client module **1150** in step **3036**.

**Fig.30C** and part of **Fig.31** show the process of retrieving the right to consume the Primary Content Segment CSn **211** using the key **725** previously obtained with the preventive consumption of Alternate Contents as in **Fig.30A**. In the first step **3055** the Encrypted Right **1255** is distributed via the Transparent Content Distribution **1155** to the Right Decryption process **1260** of the client module **1150**. In step **3057** the system checks whether new available keys are available at the server side database **3105** in the case the end user has preventively consumed Alternate Contents on different client devices. In this case the new available keys **725** are downloaded on the local database **3115** as in step **3059**. In step **3061** the Key **725** is obtained by querying on the local database of available keys **3105** the first available key **725** that corresponds to the same one extracted from the server side database **3105** in step **3031** of **Fig.30B** and used during the previous encryption of the Right **1265**. In step **3063** key **725** is used to decrypt (**1260**) the received Encrypted Right **1255** to consume the Primary Content Segment **211**, thus obtaining the Right **1265**. In step **3065** the Protected Primary Content Segment **211** is available at the Client Module **1150** and ready to be consumed. In step **3068** the symmetric key **505** is obtained by the custom or DRM based decryption process **1620** from the Right **1265** processing it with the End User Private Key **1605**. End User Private Key **1605** is matched with End User Public Key **1405** and both are generated during the End User Subscription step **815**. Finally, in step **3070** the Primary Content Segment CSn **211** is unlocked for the intended consumption using the key **505.**

Naturally, the principle of the invention remaining the same, the forms of embodiments and details of construction may be varied widely with respect to those described and illustrated purely by way of non-limiting example, without thereby departing from the scope of the present invention as defined in the appended claims.

## Claims

1. A method for conditional access to a primary protected digital content, based on preliminary access to an alternate content, including the steps of:
- providing a primary digital content to a client in an encoded form; and
- providing to the client a predetermined alternate content associated with said primary content,
whereby access to the primary content is dependent on the consumption of the alternate content,
**characterised in that** the method comprises, at a content server, the step of embedding a decoding key, adapted to unlock protection of the primary content, into a digital alternate content in such a way that the key is spread inside the alternate content,
the digital alternate content being adapted to release the decoding key at a client by integrally playing said alternate content according to predetermined playing rules.

2. A method according to claim 1, including the splitting of the primary content in content segments, an alternate content being provided to the client prior to a predetermined set of primary content segments to convey the decoding key thereof, whereby the consumption of the said alternate content allows for the consumption of a predetermined number of subsequent primary content segments.

3. A method according to claim 2, including:
- providing a reminder for the consumption of at least an alternate content for unlocking subsequent protected primary content segments, during playback of a decoded primary content segment; and
- providing said alternate content at a time between the said remainder and the end of the decoded primary content segment.

4. A method according to claim 1, 2 or 3, including:
- providing additional information to a client during alternate content playback, said additional information including graphic or acoustic notifications;
- waiting for a predetermined corresponding feedback responsive to said notifications through predetermined interactivity means; and
- de-embedding the decoding key from the alternate content when said feedback matches with the notification according to a predetermined matching rule.

5. A method according to any one of the preceding claims, comprising:
- associating a primary content and a corresponding alternate content with metadata adapted to describe the kind of contents and the supposed target user profile for that contents; and
- providing to a client an alternate content associated with said primary content, based on user-profile metadata.

6. A method according to claim 5, including generating a database of alternate content rules by joining primary content metadata, alternate content metadata and user profile metadata.

7. A method according to any of the preceding claims, including providing to the client said primary and alternate contents via a telecommunication line for their on-line consumption.

8. A method according to any of the claims 1 to 6, including providing to the client said primary and alternate contents on a respective primary and alternate content local storage system for their off-line consumption.

9. A method according to any of the preceding claims, including providing an alternative alternate content associated with a predetermined primary content, where the original alternate content is refused, skipped or reproduced in a fast-forward mode by the client.

10. A method according to any of the preceding claims, including asynchronously refreshing the encoding keys of a primary content after a predetermined expiry time limit and generating an updated alternate content associated with said primary content, which embeds an updated decoding key.

11. A method according to any of the preceding claims, including storing alternate contents associated with a predetermined primary content on a client local alternate content store, and refreshing the content of said client alternate content store at a predetermined time when the alternate content has reached an established expiry date.

12. A method according to any of the preceding claims, comprising embedding the decoding key throughout the full length of the alternate content by means of steganography techniques.

13. A method according to any of the claims 1 to 11, comprising embedding the decoding key into an alternate content in the form of an interactive multimedia applet, wherein the key is a variable defined in the source of the applet or is stored into a file associated with the applet.

14. A method according to any of the preceding claims, comprising:
- providing to a client a series of alternate contents in succession for a preventive consumption thereof, wherein the alternate contents embed predetermined decoding keys;
- storing the decoding keys released by the alternate contents both on a client and a server cache database of keys;
- encoding primary contents elements by means of said decoding keys in succession,
- providing the primary content elements to a client in the encoded form,
whereby the primary content elements are accessible by means of the decoding keys stored on the client database.

15. A method according to any of the preceding claims, wherein the primary content includes a digital multimedia content.

16. A method according to claims 1 to 14, wherein the primary content includes a digital right to access a digital content or a material good or service.

17. A method according to any of the preceding claims, wherein the alternate content includes a digital sequence of information intended to be illustrated to an end user via a multimedia interface.

18. A method according to claim 17, wherein the alternate content includes at least a commercial advertisement.

19. A method according to any of the preceding claims, comprising metering the consumption of alternate contents at a client.

20. A system for conditional access to a primary protected digital content, based on preliminary access to an alternate content, **characterised in that** it includes:
- means for providing a primary digital content to a client in an encoded form;
- means for spreading inside a predetermined digital alternate content associated with said primary content a decoding key which is adapted to unlock protection of the primary content;
- means for providing to the client said digital alternate content; and
- means for integrally playing said alternate content according to predetermined playing rules, in order for the alternate content to release the decoding key.

21. A system for conditional access to a primary protected digital content, based on preliminary access to an alternate content, arranged to perform a method according to claims 1 a 19.
